# EUROPEAN PATENT APPLICATION

(11) **EP 4 664 843 A1**
(43) Date of publication of application: **17.12.2025**
(21) Application number: 24727140.6
(22) Date of filing: 05.02.2024
(51) Int. Cl.: H04L 41/16, G06N 3/098, H04L 41/0604, H04L 41/0686

(54) **FEDERATED LEARNING**

(30) Priority: 10.02.2023 US 202363444574 P; 31.03.2023 US 202363455991 P
(71) Applicant: LG Electronics Inc., Seoul 07336 (KR)
(72) Inventor: KIM, Jaewoo, Seoul 06772 (KR); KIM, Hyunsook, Seoul 06772 (KR); KIM, Laeyoung, Seoul 06772 (KR); YOUN, Myungjune, Seoul 06772 (KR)
(74) Representative: Maikowski & Ninnemann Patentanwälte Partnerschaft mbB
(86) International application number: PCT/KR2024/001640
(87) International publication number: WO 2024/167241

(57) **Abstract**

One aspect of the present disclosure provides a method of performing communication by an AF. The method may include: transmitting a subscription message related to UE member selection assistance to a NEF for selecting a UE for application operation; and receiving a notification message associated with UE member selection assistance from the NEF.

## Description

### TECHNICAL FIELD

The present specification relates to a mobile communication.

### BACKGROUND ART

3rd Generation Partnership Project (3GPP) Long-Term Evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in International Telecommunication Union (ITU) and 3GPP to develop requirements and specifications for New Radio (NR) systems. 3GPP has to identify and develop the technology components needed for successfully standardizing the new RAT timely satisfying both the urgent market needs, and the more long-term requirements set forth by the ITU Radio communication sector (ITU-R) International Mobile Telecommunications (IMT)-2020 process. Further, the NR should be able to use any spectrum band ranging at least up to 130 GHz that may be made available for wireless communications even in a more distant future.

The NR targets a single technical framework addressing all usage scenarios, requirements and deployment scenarios including enhanced Mobile BroadBand (eMBB), massive Machine Type Communications (mMTC), Ultra-Reliable and Low Latency Communications (URLLC), etc. The NR shall be inherently forward compatible.

Federated Learning (FL) is being discussed. However, until now, there has been no efficient way to perform the operations involved in FL.

### DISCLOSURE

### TECHNICAL SOLUTION

In one aspect, a method for performing communication by an AF is provided. The method may include: transmitting a subscription message associated with UE member selection assistance to a NEF for selecting a UE for application operation; and receiving a notification message related to UE member selection assistance from the NEF.

In another aspect, an apparatus implementing the above method is provided.

In one aspect, a method for performing communication by an NEF is provided. The method may include: receiving a subscription message from an AF related to UE member selection assistance for selecting UEs for application operation; determining, based on the subscription message, a list of candidate UEs for the application operation; and transmitting a notification message to the AF related to UE member selection assistance.

In another aspect, an apparatus implementing the above method is provided.

In one aspect, a method for performing communication by a UE is provided. The method may comprise, and may include, transmitting a PDU session establishment request message to a 5GC via a base station; receiving a PDU session establishment acceptance message from the 5GC via the base station; receiving information related to an application operation of an AF from the 5GC based on the PDU session of the UE; and transmitting information to the 5GC that is used by the AF to perform the application operation.

In another aspect, an apparatus implementing the above method is provided.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of UE to which implementations of the present disclosure is applied.
FIG. 4 shows an example of 5G system architecture to which implementations of the present disclosure is applied.
FIGS. 5 and 6 show an example of a PDU session establishment procedure to which implementations of the present disclosure is applied.
FIG. 7 shows an example in which a MA PDU session is generated.
FIG. 8 shows an example of applying the ATSSS rule to the MA PDU session.
FIG. 9 illustrates an example of a split AI/ML, according to one embodiment of the present disclosure.
FIG. 10 illustrates an example of an AI/ML model deployment, according to one embodiment of the present disclosure.
FIG. 11 illustrates an example of an AI/ML model deployment, according to one embodiment of the present disclosure.
FIGS. 12a and 12b illustrate an example of a procedure for establishing a VN group by an AF.
FIG. 13 is an example of a procedure according to the first embodiment or second embodiment of the present disclosure.
FIG. 14 is an example of a procedure according to the third embodiment of the present disclosure.
FIG. 15 is an example of a procedure combining one or more embodiments of the present disclosure.
FIG. 16 is an example of a procedure performed according to one embodiment of the present disclosure.

### MODE FOR INVENTION

The following techniques, apparatuses, and systems may be applied to a variety of wireless multiple access systems. Examples of the multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, a Single Carrier Frequency Division Multiple Access (SC-FDMA) system, and a Multi Carrier Frequency Division Multiple Access (MC-FDMA) system. CDMA may be embodied through radio technology such as Universal Terrestrial Radio Access (UTRA) or CDMA2000. TDMA may be embodied through radio technology such as Global System for Mobile communications (GSM), General Packet Radio Service (GPRS), or Enhanced Data rates for GSM Evolution (EDGE). OFDMA may be embodied through radio technology such as Institute of Electrical and Electronics Engineers (IEEE) 802.11 (Wi-Fi), IEEE 802.16 (WiMAX), IEEE 802.20, or Evolved UTRA (E-UTRA). UTRA is a part of a Universal Mobile Telecommunications System (UMTS). 3rd Generation Partnership Project (3GPP) Long-Term Evolution (LTE) is a part of Evolved UMTS (E-UMTS) using E-UTRA. 3GPP LTE employs OFDMA in downlink (DL) and SC-FDMA in uplink (UL). Evolution of 3GPP LTE includes LTE-Advanced (LTE-A), LTE-A Pro, and/or 5G New Radio (NR).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDDCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

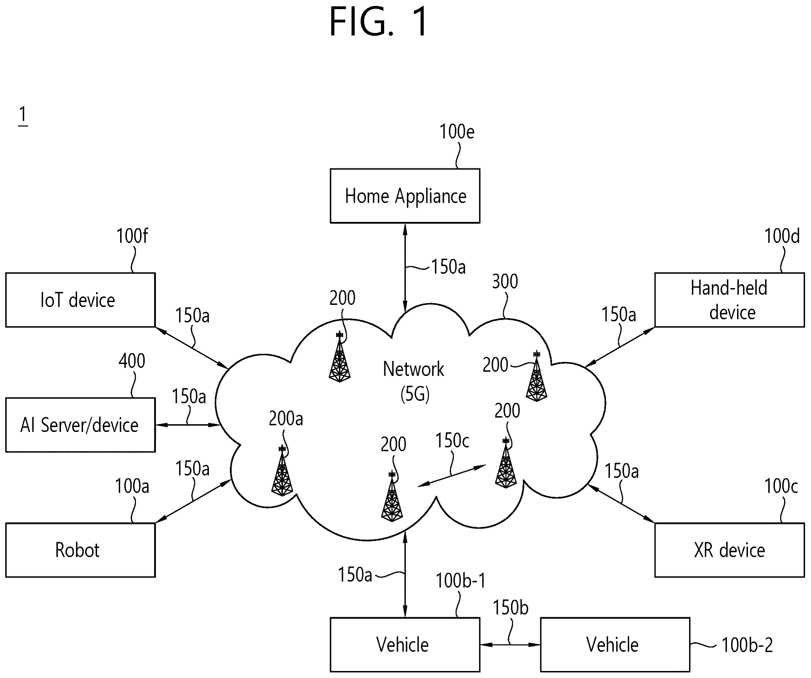

FIG. 1 shows an example of a communication system to which implementations of the present disclosure is applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced Mobile BroadBand (eMBB), (2) a category of massive Machine Type Communication (mMTC), and (3) a category of Ultra-Reliable and Low Latency Communications (URLLC).

Referring to FIG. 1, the communication system 1 includes wireless devices 100a to 100f, Base Stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using Radio Access Technology (RAT) (e.g., 5G NR or LTE) and may be referred to as communication/radio/SG devices. The wireless devices 100a to 100f may include, without being limited to, a robot 100a, vehicles 100b-1 and 100b-2, an eXtended Reality (XR) device 100c, a hand-held device 100d, a home appliance 100e, an Internet-of-Things (IoT) device 100f, and an Artificial Intelligence (AI) device/server 400. For example, the vehicles may include a vehicle having a wireless communication function, an autonomous driving vehicle, and a vehicle capable of performing communication between vehicles. The vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called User Equipments (UEs). A UE may include, for example, a cellular phone, a smartphone, a laptop computer, a digital broadcast terminal, a Personal Digital Assistant (PDA), a Portable Multimedia Player (PMP), a navigation system, a slate Personal Computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or Device-to-Device (D2D) communication) 150b, inter-base station communication 150c (e.g., relay, Integrated Access and Backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

NR supports multiples numerologies (and/or multiple Sub-Carrier Spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., Frequency Range 1 (FR1) and Frequency Range 2 (FR2). The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter Wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include NarrowBand IoT (NB-IoT) technology for low-power communication as well as LTE, NR and 6G. For example, NB-IoT technology may be an example of Low Power Wide Area Network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced MTC (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate Personal Area Networks (PANs) associated with small/low-power digital communication based on various specifications such as IEEE 802.15.4 and may be called various names.

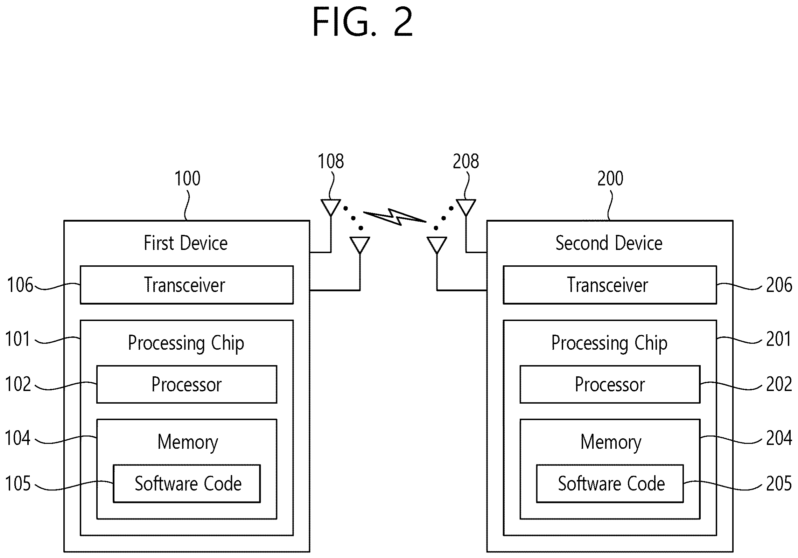

FIG. 2 shows an example of wireless devices to which implementations of the present disclosure is applied.

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor. The one or more memories 104 and 204 may be connected to the one or more processors 102 and 202 and store various types of data, signals, messages, information, programs, code, instructions, and/or commands. The one or more memories 104 and 204 may be configured by Random Access Memory (RAM), Dynamic RAM (DRAM), Read-Only Memory (ROM), electrically Erasable Programmable Read-Only Memory (EPROM), flash memory, volatile memory, non-volatile memory, hard drive, register, cash memory, computer-readable storage medium, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208. Additionally and/or alternatively, the one or more transceivers 106 and 206 may include one or more antennas 108 and 208. The one or more transceivers 106 and 206 may be adapted to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in Uplink (UL) and as a receiving device in Downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

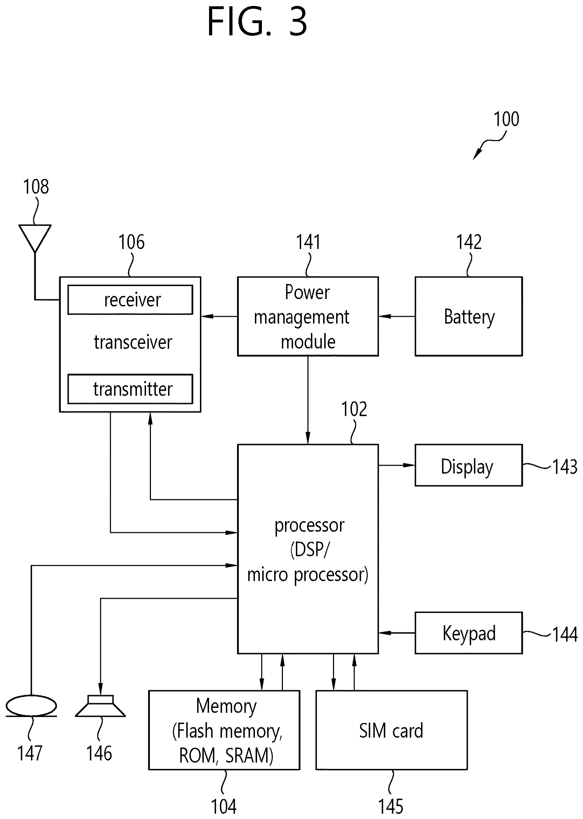

FIG. 3 shows an example of UE to which implementations of the present disclosure is applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

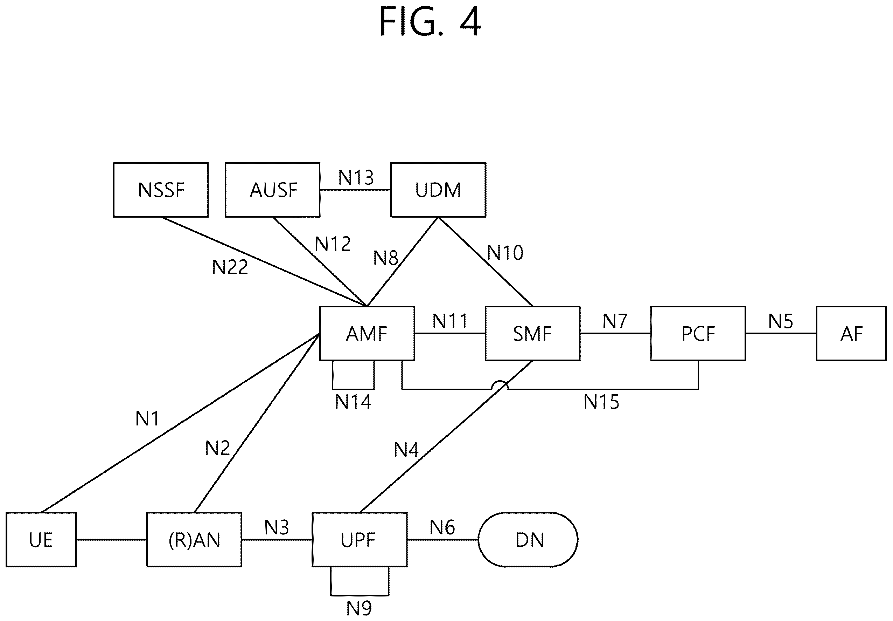

FIG. 4 shows an example of 5G system architecture to which implementations of the present disclosure is applied.

The 5G system (5GS) architecture consists of the following network functions (NF).
- Authentication Server Function (AUSF)
- Access and Mobility Management Function (AMF)
- Data Network (DN), e.g., operator services, Internet access or 3rd party services
- Unstructured Data Storage Function (UDSF)
- Network Exposure Function (NEF)
- Intermediate NEF (I-NEF)
- Network Repository Function (NRF)
- Network Slice Selection Function (NSSF)
- Policy Control Function (PCF)
- Session Management Function (SMF)
- Unified Data Management (UDM)
- Unified Data Repository (UDR)
- User Plane Function (UPF)
- UE radio Capability Management Function (UCMF)
- Application Function (AF)
- User Equipment (UE)
- (Radio) Access Network ((R)AN)
- 5G-Equipment Identity Register (5G-EIR)
- Network Data Analytics Function (NWDAF)
- CHarging Function (CHF)

Furthermore, the following network functions may be considered.
- Non-3GPP InterWorking Function (N3IWF)
- Trusted Non-3GPP Gateway Function (TNGF)
- Wireline Access Gateway Function (W-AGF)

FIG. 4 depicts the 5G system architecture in the non-roaming case, using the reference point representation showing how various network functions interact with each other.

In FIG. 4, for the sake of clarity of the point-to-point diagrams, the UDSF, NEF and NRF have not been depicted. However, all depicted Network Functions can interact with the UDSF, UDR, NEF and NRF as necessary.

For clarity, the UDR and its connections with other NFs, e.g., PCF, are not depicted in FIG. 4. For clarity, the NWDAF and its connections with other NFs, e.g., PCF, are not depicted in FIG. 4.

The 5G system architecture contains the following reference points:
- N1: Reference point between the UE and the AMF.
- N2: Reference point between the (R)AN and the AMF.
- N3: Reference point between the (R)AN and the UPF.
- N4: Reference point between the SMF and the UPF.
- N6: Reference point between the UPF and a Data Network.
- N9: Reference point between two UPFs.

The following reference points show the interactions that exist between the NF services in the NFs.
- N5: Reference point between the PCF and an AF.
- N7: Reference point between the SMF and the PCF.
- N8: Reference point between the UDM and the AMF.
- N10: Reference point between the UDM and the SMF.
- N11: Reference point between the AMF and the SMF.
- N12: Reference point between the AMF and the AUSF.
- N13: Reference point between the UDM and the AUSF.
- N14: Reference point between two AMFs.
- N15: Reference point between the PCF and the AMF in the case of non-roaming scenario, PCF in the visited network and AMF in the case of roaming scenario.
- N16: Reference point between two SMFs, (in roaming case between SMF in the visited network and the SMF in the home network).
- N22: Reference point between the AMF and the NSSF.

In some cases, a couple of NFs may need to be associated with each other to serve a UE.

PDU session establishment procedure is described. Section 4.3.2 of 3GPP TS 23.502 V16.3.0 (2019-12) can be referenced.

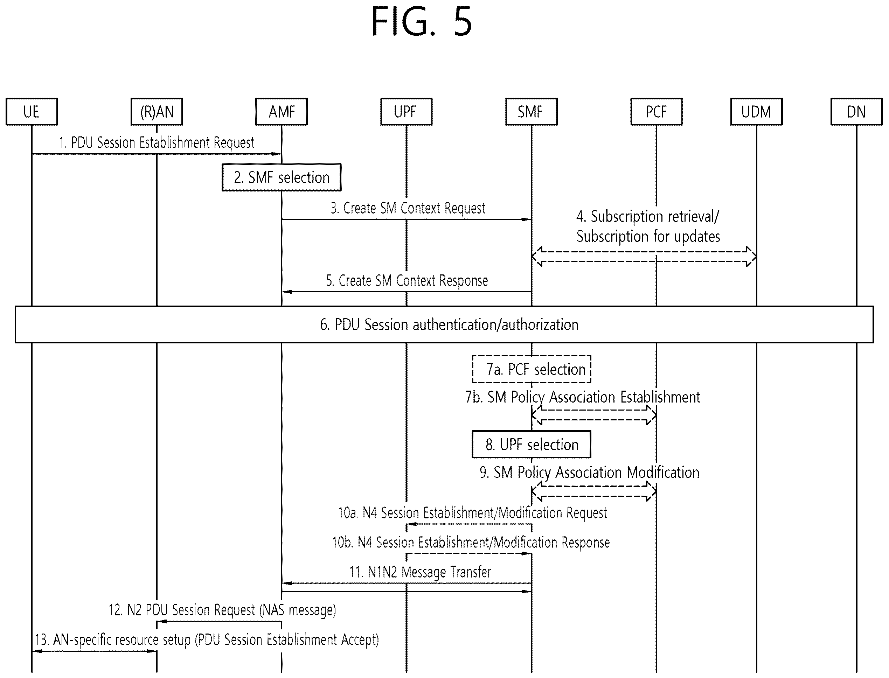

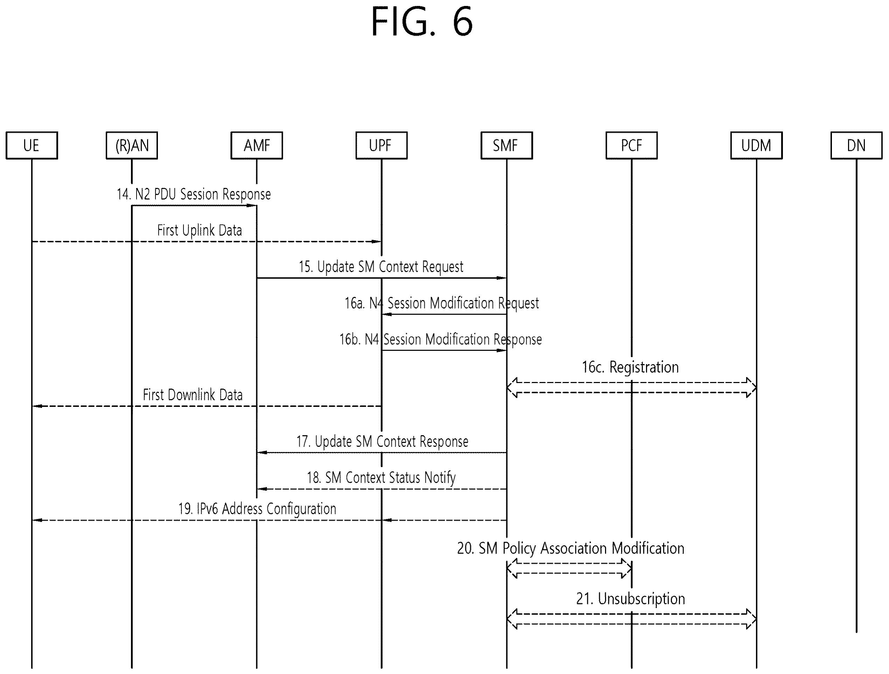

**FIGS. 5** **and** **6** **show an example of a PDU session establishment procedure to which implementations of the present disclosure is applied.**

A PDU session establishment may correspond to:
- a UE initiated PDU session establishment procedure.
- a UE initiated PDU session handover between 3GPP and non-3GPP.
- a UE initiated PDU session handover from EPS to 5GS.
- a network triggered PDU session establishment procedure.

A PDU session may be associated either (a) with a single access type at a given time, i.e., either 3GPP access or non-3GPP access, or (b) simultaneously with multiple access types, i.e., one 3GPP access and one non-3GPP access. A PDU session associated with multiple access types is referred to as multi access PDU (MA PDU) session and it may be requested by access traffic steering, switching, splitting (ATSSS)-capable UEs.

FIGS. 5 and 6 specify the procedures for establishing PDU sessions associated with a single access type at a given time.

The procedure shown in FIGS. 5 and 6 assumes that the UE has already registered on the AMF thus unless the UE is emergency registered the AMF has already retrieved the user subscription data from the UDM.

First, procedures of FIG. 5 are described.

### (1) Step 1: In order to establish a new PDU session, the UE generates a new PDU session ID.

The UE initiates the UE requested PDU session establishment procedure by the transmission of a NAS message containing a PDU Session Establishment Request message within the N1 SM container. The PDU Session Establishment Request message includes a PDU session ID, Requested PDU Session Type, a Requested session and service continuity (SSC) mode, 5GSM Capability, protocol configuration options (PCO), SM PDU DN Request Container, UE Integrity Protection Maximum Data Rate, etc.

The Request Type indicates "Initial request" if the PDU session establishment is a request to establish a new PDU session and indicates "Existing PDU Session" if the request refers to an existing PDU session switching between 3GPP access and non-3GPP access or to a PDU session handover from an existing packet data network (PDN) connection in EPC. The Request Type indicates "Emergency Request" if the PDU session establishment is a request to establish a PDU session for emergency services. The Request Type indicates "Existing Emergency PDU Session" if the request refers to an existing PDU session for emergency services switching between 3GPP access and non-3GPP access or to a PDU session handover from an existing PDN connection for emergency services in EPC.

The UE includes the S-NSSAI from the Allowed NSSAI of the current access type. If the Mapping of Allowed NSSAI was provided to the UE, the UE shall provide both the S-NSSAI of the visited PLMN (VPLMN) from the Allowed NSSAI and the corresponding S-NSSAI of the HPLMN from the Mapping Of Allowed NSSAI.

(2) Step 2: The AMF selects an SMF. If the Request Type indicates "Initial request" or the request is due to handover from EPS or from non-3GPP access serving by a different AMF, the AMF stores an association of the S-NSSAI(s), the data network name (DNN), the PDU session ID, the SMF ID as well as the Access Type of the PDU session.

If the Request Type is "initial request" and if the Old PDU session ID indicating the existing PDU session is also contained in the message, the AMF selects an SMF and stores an association of the new PDU Session ID, the S-NSSAI(s), the selected SMF ID as well as Access Type of the PDU Session.

If the Request Type indicates "Existing PDU Session", the AMF selects the SMF based on SMF-ID received from UDM. The AMF updates the Access Type stored for the PDU session.

If the Request Type indicates "Existing PDU Session" referring to an existing PDU session moved between 3GPP access and non-3GPP access, then if the serving PLMN S-NSSAI of the PDU session is present in the Allowed NSSAI of the target access type, the PDU session establishment procedure can be performed in the following cases:
- the SMF ID corresponding to the PDU session ID and the AMF belong to the same PLMN;
- the SMF ID corresponding to the PDU session ID belongs to the HPLMN;

Otherwise the AMF shall reject the PDU session establishment request with an appropriate reject cause.

The AMF shall reject a request coming from an emergency registered UE and the Request Type indicates neither "Emergency Request" nor "Existing Emergency PDU Session".

(3) Step 3: If the AMF does not have an association with an SMF for the PDU session ID provided by the UE (e.g., when Request Type indicates "initial request"), the AMF invokes Create SM Context Request procedure (e.g., Nsmf_PDUSession_CreateSMContext Request). If the AMF already has an association with an SMF for the PDU session ID provided by the UE (e.g., when Request Type indicates "existing PDU Session"), the AMF invokes Update SM Context Request procedure (e.g., Nsmf_PDUSession_UpdateSMContext Request).

The AMF sends the S-NSSAI of the serving PLMN from the Allowed NSSAI to the SMF. For roaming scenario in local breakout (LBO), the AMF also sends the corresponding S-NSSAI of the HPLMN from the Mapping Of Allowed NSSAI to the SMF.

The AMF ID is the UE's GUAMI which uniquely identifies the AMF serving the UE. The AMF forwards the PDU session ID together with the N1 SM container containing the PDU Session Establishment Request message received from the UE. The generic public subscription identifier (GPSI) shall be included if available at AMF.

The AMF provides the PEI instead of the SUPI when the UE in limited service state has registered for emergency services without providing a SUPI. In case the UE in limited service state has registered for Emergency services with a SUPI but has not been authenticated, the AMF indicates that the SUPI has not been authenticated. The SMF determines that the UE has not been authenticated when it does not receive a SUPI for the UE or when the AMF indicates that the SUPI has not been authenticated.

The AMF may include a PCF ID in the Nsmf_PDUSession_CreateSMContext Request. This PCF ID identifies the home PCF (H-PCF) in the non-roaming case and the visited PCF (V-PCF) in the LBO roaming case.

(4) Step 4: If session management subscription data for corresponding SUPI, DNN and S-NSSAI of the HPLMN is not available, then SMF may retrieve the session management subscription data from the UDM and subscribes to be notified when this subscription data is modified.

(5) Step 5: The SMF transmits either Create SM Context Response message (e.g., Nsmf_PDUSession_CreateSMContext Response) or Update SM Context Response message (e.g., Nsmf_PDUSession_UpdateSMContext Response) to the AMF, depending on the request received in step 3.

If the SMF received Nsmf_PDUSession_CreateSMContext Request in step 3 and the SMF is able to process the PDU session establishment request, the SMF creates an SM context and responds to the AMF by providing an SM Context ID.

When the SMF decides to not accept to establish a PDU session, the SMF rejects the UE request via NAS SM signaling including a relevant SM rejection cause by responding to the AMF with Nsmf_PDUSession_CreateSMContext Response. The SMF also indicates to the AMF that the PDU session ID is to be considered as released, the SMF proceeds to step 20 below and the PDU session establishment procedure is stopped.

(6) Step 6: Optional secondary authentication/authorization may be performed.

(7a) Step 7a: If dynamic policy and charging control (PCC) is to be used for the PDU session, the SMF may perform PCF selection.

(7b) Step 7b: The SMF may perform an SM Policy Association Establishment procedure to establish an SM Policy association with the PCF and get the default PCC rules for the PDU session.

(8) Step 8: The SMF selects one or more UPFs.

(9) Step 9: The SMF may perform an SMF initiated SM Policy Association Modification procedure to provide information on the policy control request trigger condition(s) that have been met.

(10) Step 10: If Request Type indicates "initial request", the SMF may initiate an N4 Session Establishment procedure with the selected UPF. Otherwise, the SMF may initiate an N4 Session Modification procedure with the selected UPF

In step 10a, the SMF may send an N4 Session Establishment/Modification Request to the UPF and provides packet detection, enforcement and reporting rules to be installed on the UPF for this PDU session. In step 10b, the UPF may acknowledge by sending an N4 Session Establishment/Modification Response.

(11) Step 11: The SMF transmits a N1N2Message Transfer message (e.g., Namf_Communication_N1N2MessageTransfer) to the AMF.

The N1N2Message Transfer message may include N2 SM information. The N2 SM information carries information that the AMF shall forward to the (R)AN which may include:
- The CN Tunnel Info: Core network address(es) of the N3 tunnel corresponding to the PDU session;
- One or multiple quality of service (QoS) profiles and the corresponding QoS flow IDs (QFIs);
- The PDU session ID: indicate to the UE the association between (R)AN resources and a PDU session for the UE.
- S-NSSAI with the value for the serving PLMN (i.e., the HPLMN S-NSSAI or, in LBO roaming case, the VPLMN S-NSSAI).
- User Plane Security Enforcement information determined by the SMF.
- If the User Plane Security Enforcement information indicates that integrity protection is "Preferred" or "Required(or Mandatory)", the SMF also includes the UE Integrity Protection Maximum Data Rate as received in the PDU Session Establishment Request message.
- Redundancy sequence number (RSN) parameter

The N1N2Message Transfer message may include N1 SM container. The N1 SM container contains the PDU Session Establishment Accept message that the AMF shall provide to the UE. The PDU Session Establishment Accept message includes S-NSSAI from the Allowed NSSAI. For LBO roaming scenario, the PDU Session Establishment Accept message includes the S-NSSAI from the Allowed NSSAI for the VPLMN and also it includes the corresponding S-NSSAI of the HPLMN from the Mapping Of Allowed NSSAI that SMF received in step 3.

Multiple QoS Rules, QoS flow level, QoS parameters if needed for the QoS Flow(s) associated with those QoS rule(s) and QoS Profiles may be included in the PDU Session Establishment Accept message within the N1 SM container and in the N2 SM information.

If the PDU session establishment failed anywhere between step 5 and step 11, then the N1N2Message Transfer message shall include the N1 SM container with a PDU Session Establishment Reject message and shall not include any N2 SM information. The (R)AN sends the NAS message containing the PDU Session Establishment Reject message to the UE. In this case, steps 12-17 are skipped.

(12) Step 12: The AMF sends the NAS message containing PDU Session ID and PDU Session Establishment Accept message targeted to the UE and the N2 SM information received from the SMF within the N2 PDU Session Request message to the (R)AN.

(13) Step 13: The (R)AN may issue AN specific signaling exchange with the UE that is related with the information received from SMF. For example, in case of a NG-RAN, an RRC connection reconfiguration may take place with the UE establishing the necessary NG-RAN resources related to the QoS rules for the PDU session request received in step 12.

The (R)AN forwards the NAS message (PDU Session ID, N1 SM container (PDU Session Establishment Accept message)) provided in step 12 to the UE. The (R)AN shall only provide the NAS message to the UE if the AN specific signaling exchange with the UE includes the (R)AN resource additions associated to the received N2 command.

If the N2 SM information is not included in the step 11, then the following steps 14 to 16b and step 17 are omitted.

Now, procedures of FIG. 6, which follow the procedures of FIG. 5, are described.

(14) Step 14: The (R)AN transmits a N2 PDU Session Response message to the AMF. The N2 PDU Session Response message may include PDU session ID, Cause, N2 SM information (PDU Session ID, AN Tunnel Info, List of accepted/rejected QFI(s), User Plane Enforcement Policy Notification)), etc.

(15) Step 15: The AMF transmits an Update SM Context Request message (e.g., Nsmf_PDUSession_UpdateSMContext Request) to the SMF. The AMF forwards the N2 SM information received from (R)AN to the SMF.

(16a) Step S16a: The SMF initiates an N4 Session Modification procedure with the UPF. The SMF provides AN Tunnel Info to the UPF as well as the corresponding forwarding rules.

(16b) Step S16b: The UPF provides an N4 Session Modification Response to the SMF.

After this step, the UPF may deliver any DL packets to the UE that may have been buffered for this PDU session.

(16c) Step 16c: If the SMF has not yet registered for this PDU session, then the SMF may register with the UDM for a given PDU Session.

(17) Step 17: The SMF transmits an Update SM Context Response message (e.g., Nsmf_PDUSession_UpdateSMContext Response) to the AMF.

After this step, the AMF forwards relevant events subscribed by the SMF.

(18) Step 18: If during the procedure, any time after step 5, the PDU session establishment is not successful, the SMF may inform the AMF by invoking Nsmf_PDUSession_SMContextStatusNotify (Release). The SMF may also release any N4 session(s) created, any PDU session address if allocated (e.g., IP address) and release the association with PCF, if any. In this case, step 19 is skipped.

(19) Step 19: In the case of PDU Session Type IPv6 or IPv4v6, the SMF may generate an IPv6 Router Advertisement and send it to the UE.

(20) Step 20: The SMF may perform SMF initiated SM Policy Association Modification.

(21) Step 21: If the PDU Session establishment failed after step 4, the SMF may unsubscribe to the modifications of session management subscription data, if the SMF is no more handling a PDU session of the UE.

### <Multi-Access (MA) PDU session>

In the prior art, the MA PDU session is a session that can be serviced simultaneously with 3GPP access and non-3GPP access using one PDU session.

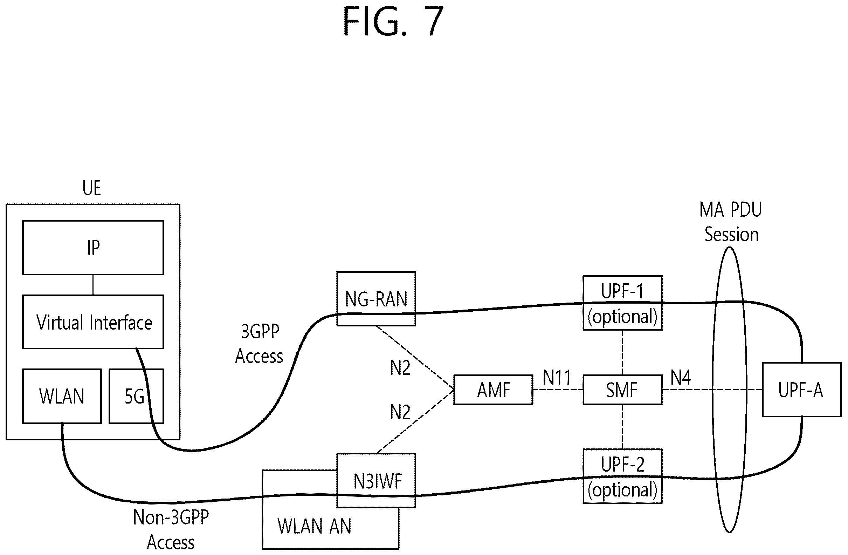

FIG. 7 shows an example in which a MA PDU session is generated.

In FIG. 7, the MA PDU session is one PDU session and has a separate session tunnel for each access. One is established on 3GPP access, and the other PDU session is established on untrusted non-3GPP access (e.g., WLAN AN).

Since the MA PDU session is one session, the MA PDU session has the following characteristics.
(i) one DNN;
(ii) one UPF Anchor (UPF-A);
(iii) one PDU type (e.g., IPv6);
(iv) one session IP address
(v) one SSC mode
(vi) one HPLMN S-NSSAI.

The MA PDU session enables a multipath data link between the UE and UPF-A. This can be implemented below the IP layer.

A MA PDU session may be established through one of the following procedures.
(i) It can be established through two separate PDU session establishment procedures. This is called individual establishment.
(ii) It may be established through one MA PDU session establishment procedure. That is, the MA PDU session is simultaneously established in two accesses with one session establishment request. This is called binding establishment.

After the MA PDU session is established, Session Management (SM) signaling related to the MA PDU session may be transmitted and received through random access.

### A. Individual establishment of MA PDU session

A MA PDU session may be established through two separate PDU session establishment procedures. For example, the UE may establish a MA PDU session on 3GPP access, and then perform a PDU session establishment procedure on non-3GPP access in order to add non-3GPP access to the MA PDU session created on 3GPP access. The request type in the establishment request message for adding the second access may be set to "MA PDU Request".

### B. Binding establishment.

A MA PDU session may be simultaneously established for 3GPP access and non-3GPP access through one procedure. Such one procedure may be referred to as a MA PDU session establishment procedure by UE request. The above procedure may be useful when the UE intends to establish a MA PDU session while the UE is already registered with 5GC through two accesses. Instead of performing two separate PDU session establishment procedures, the UE may establish a MA PDU session by performing one MA PDU session establishment procedure.

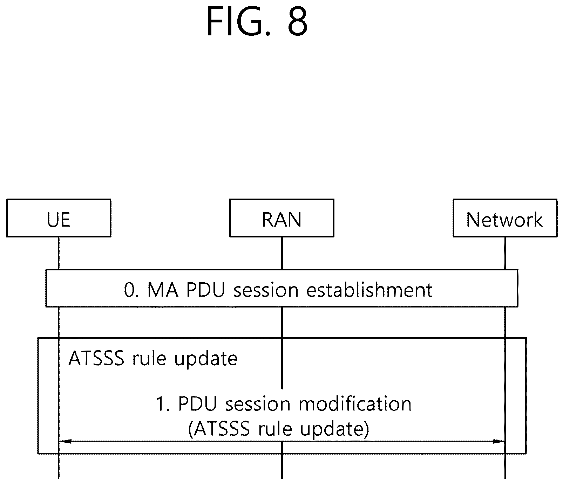

FIG. 8 shows an example of applying the ATSSS rule to the MA PDU session.

Referring to FIG. 8 , if the SMF wants to move an IP flow transmitted to non-3GPP access to 3GPP access in a state in which a multi-access (MA) PDU session is established, through 3GPP access, updated ATSSS (Access Traffic Steering, Switching and Splitting) rules can be transmitted.

### <Services based on Artificial Intelligence(Al)/Machine Learning (ML)>

3GPP is discussing ways to support AL/ML-based services for 5GS.

For example, along with 5GS assistance, AI/ML services and transport are being discussed to support distribution, transfer, and training of AI/ML models for various applications. For example, applications may include image/voice recognition, robot control, automotive, etc.

AI/ML operations can include three main types, for example
- AI/ML operation splitting between AI/ML endpoints
- AI/ML model/data distribution and sharing over 5G system
- Distributed/Federated Learning (FL) over 5G system

The following examples illustrate objectives of how AI/ML service providers can utilize 5GS as a platform to provide intelligent transmission support for application layer AI/ML operations.
1. Objective 1: Study possible architectural and functional extensions to support application layer AI/ML operations.
   a. Support network resource utilization monitoring in 5G systems related to UEs to support Application AI/ML operations in conjunction with AI/ML model providers.
   b. 5GS information exposure extensions to the 5GC NF(s) to expose UE and/or network state and performance predictions (e.g. location, QoS, load, congestion, etc.). Support for whether and how to expose such information to the UE and/or authorized third parties to support application AI/ML operations.
   c. Enhancements of external parameter provisioning for 5GC based on application AI/ML operations (e.g., expected UE activity behaviors, expected UE mobility, etc.).
   d. Investigate enhancements to other 5GC features that can be used to support application AI/ML operations.
2. Objective 2: Study possible QoS, policy enhancements to support application AI/ML operational traffic while supporting general (non-application AI/ML) 5GS user traffic.
3. Objective 3: To study if and how 5GS can provide support to AFs and UEs to manage FL operations and model distribution/redistribution (e.g., selecting FL members, monitoring group performance, and allocating and ensuring appropriate network resources). To facilitate collaborative application AI/ML-based federated learning operations between application clients and application servers running on UEs, such research may be conducted.

All UEs participating in a given Application AI/ML operation can be served by the same S-NSSAI as the AF.

The following are examples of three major AI/ML operations.

Artificial intelligence (Al)/machine learning (ML) is being used in a variety of applications across industries. In mobile communication systems, mobile devices (e.g., smartphones, cars, robots) are increasingly replacing traditional algorithms (e.g., speech recognition, image recognition, video processing) with AI/ML models to enable applications.

5G systems can support at least three types of AI/ML operations. The following examples represent the three types of AI/ML operations:
- AI/ML operation splitting between AI/ML endpoints;
- AI/ML model/data distribution and sharing over 5G system;
- Distributed/Federated Learning over 5G system;

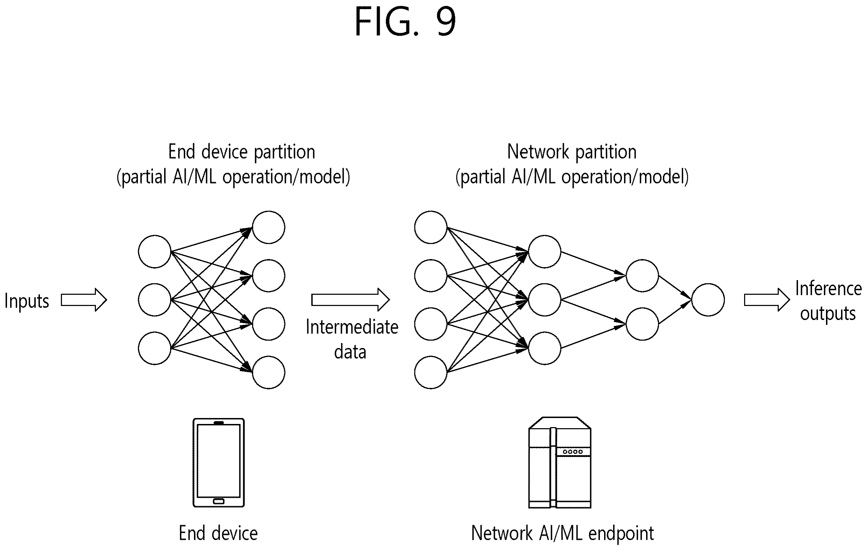

The example in Figure 9 shows an example of splitting AI/ML operation between AI/ML endpoints.

The following drawings are intended to illustrate specific embodiments of the present disclosure. The designations of specific devices or the designations of specific signals/messages/fields shown in the drawings are for illustrative purposes only, and the technical features of the present disclosure are not limited to the specific designations used in the drawings below.

**FIG. 9** **illustrates an example of a split AI/ML, according to one embodiment of the present disclosure.**

The split AI/ML inference approach can be represented as shown in Figure 9. The AI/ML operation/model is split into multiple parts depending on the current operation and environment. Computationally intensive and energy-intensive parts can be offloaded to network endpoints, while privacy-sensitive and latency-sensitive parts can be left on end devices. The device may execute the job/model to a certain part/layer and then send intermediate data to the network endpoint. The network endpoint can execute the remaining parts/layers and provide the inference results back to the device.

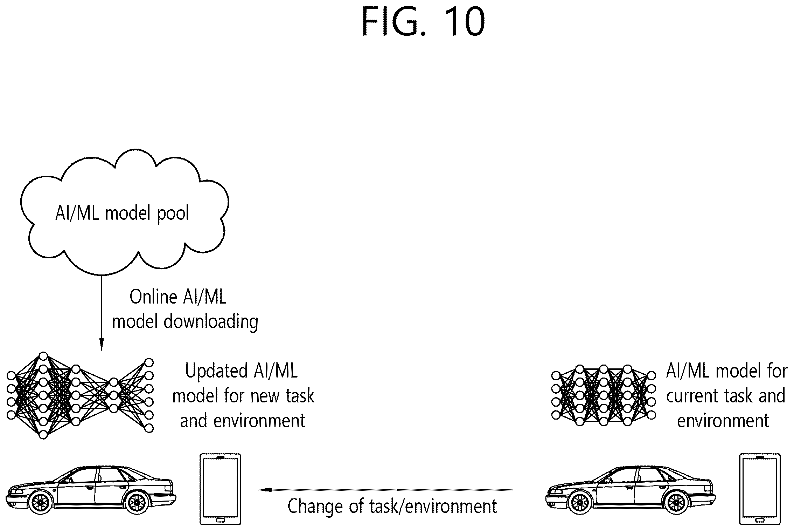

The example in Figure 10 shows an example of AI/ML model/data deployment and sharing over a 5G system.

The following drawings are intended to illustrate specific embodiments of the present disclosure. The designations of specific devices or the designations of specific signals/messages/fields shown in the drawings are for illustrative purposes only, and the technical features of the present disclosure are not limited to the specific designations used in the drawings below.

**FIG. 10** **illustrates an example of an AI/ML model deployment, according to one embodiment of the present disclosure.**

The AI/ML model deployment approach can be illustrated in Figure 10. Multi-functional mobile terminals may need to switch AI/ML models based on operation change and environment change. A condition for adaptive model selection may be that the model to be selected is available on the mobile device. However, due to the fact that AI/ML models are becoming increasingly diverse and the limited storage resources of the UE, it may be decided not to preload all candidate AI/ML models to onboard. Online model deployment (i.e., downloading new models) may be required, where AI/ML models can be deployed from the NW endpoint to the device as needed to adapt to changed AI/ML operations and environments. This may require continuous monitoring of model performance on the UE.

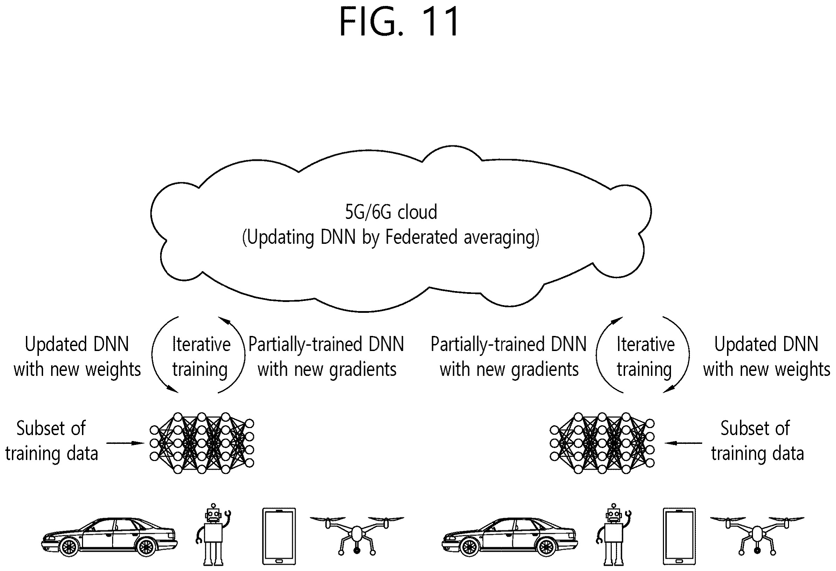

The example in Figure 11 shows an example of distributed/federated learning over a 5G system.

The following drawings are intended to illustrate specific embodiments of the present disclosure. The designations of specific devices or the designations of specific signals/messages/fields shown in the drawings are for illustrative purposes only, and the technical features of the present disclosure are not limited to the specific designations used in the drawings below.

**FIG. 11** **illustrates an example of an AI/ML model deployment, according to one embodiment of the present disclosure.**

An example of a Federated Learning (FL) scheme can be depicted as shown in Figure 11.

The cloud server may aggregate the partially trained local models from each end device to train a global model. Within each training iteration, the UE may perform training based on the model downloaded from the AI server, using local training data. The UE may then report intermediate training results to the cloud server over the 5G UL channel. The server may aggregate the intermediate training results from the UEs and update the global model. The updated global model is then redistributed to the UE and the UE can perform training for the next iteration.

The present disclosures described in the present disclosure may be implemented in one or more combinations, such as combinations comprising at least one of those described below. While each of the figures illustrates an embodiment of each disclosure, embodiments of the figures may be implemented in combination with each other.

The description of the methods proposed in the present disclosure may comprise any combination of one or more of the operations/compositions/steps described below. The following methods described below may be performed or used complementarily or in combination.

The support of the 5GS for FL operations may be discussed, i.e., 5GS Assistance to Federated Learning Operation.

On the other hand, in 5G, support for Artificial Intelligence (AI)/Machine Learning (ML) based services is being discussed. Application Functions (AFs) such as Application Server (AS) can perform Federated Learning (FL) operations. However, there is currently no way for the 5G System (5GS) to support these AFs to perform FL operations. For example, there has been no specific discussion of how the 5GS can provide assistance information to these AFs, nor has there been any discussion of how the AFs may request assistance information from the 5GS.

For example, it needs to be discussed how the 5GS will provide support information to assist the AF in selecting UEs for FL operation. Also, what information the 5GS will receive from the AF and what information the 5GS will provide to the AF needs to be discussed. Furthermore, in order for the 5GS to support FL operation for AI/ML applications, it is necessary to discuss how to collect information within the 5GS based on the application's request (e.g., preferred time of day to perform FL operation, region for FL operation) and provide assistance information to the AF, such as a list of candidate UEs for FL operation and recommended time of day for FL operation.

It may be discussed whether and how the 5GS provides support to the AF and/or UE to manage FL operations and model distribution/redistribution (e.g., selecting FL members, monitoring group performance, and allocating and ensuring appropriate network resources). For reference, in various descriptions of the present disclosure, AF may be used interchangeably with Application Server (AS). This may facilitate a collaborative Application AI/ML based Federated Learning operation between an Application Client and an Application Server running on the UE.

To support FL operation for AFs and UEs, the following examples may be discussed:

UE selection assistance for FL operation may be discussed. For example, it may be discussed whether, how and what information the 5GC may provide to the AF to assist the AF in selecting and managing a group of UEs to be part of the FL operation. Note that the AF may control and manage the FL group management. For example, it may be discussed whether, how, and what information is required from the 5GC to support the AF in selecting and managing UE groups to be part of the FL operation;

Performance monitoring/exposure may be discussed. For example, methods for monitoring and exposing UE or UE group performance (e.g., aggregated QoS parameters) associated with FL operation may be discussed. For example, it may be discussed whether and which existing or new monitoring events (e.g., QoS, location, load, congestion) are required to capture specific system performance and predictions for traffic associated with AI/ML operations for FL operation.

FL performance may be discussed. For example, when an application server receives local ML model training information from other UEs to perform global model updates, how to support AF to improve FL performance between UEs (e.g., managing latency divergence) may be discussed.

When it comes to technologies that support FL-related operation in applications, there are issues such as the following examples.
- A new member selection assistance functionality needs to be materialized. Here, the new member selection assistance functionality may be a function provided by the 5GC. For example, when the 5GC receives a request from the AF to provide a list of candidate UEs and additional information, the 5GC may provide this functionality. Here, the member may be a member that is used to perform application operation (e.g., FL related operation).
- The new member selection assistance functionality may be used by AI/ML-based applications to select FL members.
- The new member selection assistance may provide a list of recommended UEs based on the parameters included in the AF's request.
- As part of the request service operation for the 5GC, the AF includes the following parameters:
- List of UEs (UEs or UE list).
- The 5GC provides the following parameters as part of the response service operation for AF:
- A list of candidate UEs that the AF may choose from.

Note that additional parameters to be included in the request/response from the AF and the procedure for selecting the candidate UE list need to be discussed.
- The new member selection assistance functionality is hosted on NEF.

Note that if the new member selection assistance functionality is not enabled, the AF may behave like the example described in S4.15 of TS 23.502 V18.0.0. For example, the AF may select AI/ML members based on existing network exposure information.

As a side note, it's worth discussing how to support trusted AF with member selection assistance.

The NEF may provide UE Member Selection Assistance Functionality to support the AI/ML operation of the Application. The UE Member Selection Assistance Functionality may not be specific to Application AI/ML FL operation, but may be the UE Member Selection Assistance Functionality required for general Application operation. This functionality may also be used for AI/ML FL related operation. The NEF may receive a UE member selection assistance request from the AF along with a UE list for the Application operation. The NEF may transmit one or more UE member lists that will satisfy the AF's request and additional information about the UE member lists to the AF.

Accordingly, the functionality for UE member selection may be defined as in the following example.

UE member selection assistance functionalities for application operations are described.

To support the AF in selecting member UEs that may be used for application operations such as AI/ML based applications (e.g. federated learning (FL)), the 5G system may support a UE member selection assistance functionality. The UE member selection assistance functionality may be hosted by the NEF. The UE member selection assistance functionality hosted by the NEF shall be characterized by the following features

- The NEF may receive a request from the AF containing a list of target member UEs, optionally a time window, and one or more filtering criteria specified in Table 5.2.6.X.1-1 of TS 23.502 V18.0.0 (e.g., number of UEs, UE location, trajectory and orientation, QoS requirements, region of interest, DNN, S-NSSAI, expected application operation time duration, preferred access/RAT type, desired UE transmission delay performance). One or more of the UE member filtering criteria may be required.

- The NEF may cooperate with other relevant 5GC NFs (e.g. PCF, NWDAF, AMF). The NEF may collect the necessary information of target member UEs from these 5GC NFs and derive a list of candidate UEs. The event filtering criteria are used by the NEF to collect data from other 5GC NFs to derive a list of candidate UEs (i.e., UEs from the provided list of target member UEs). Other additional information (e.g., recommended time window for performing application operation QoS for each target UE, UE location, access/RAT type) may be provided by the NEF.
- The NEF may provide UE member selection assistance information to the AF.

The UE member selection assistance information provided by the NEF may be used by the AF to select member UEs.

NOTE 2: The AF may choose whether to use the UE member selection assistance functionality provided by the NEF. AFs in trusted or untrusted domains may select UE members based on existing network exposure information, as described in clause 4.15 of TS 23.502.

The detailed procedure for such operation and the filtering criteria for filtering UE members are not clearly defined. For the filtering criteria for filtering UE members, the following preliminary candidates have been discussed (e.g. S2-2300152r20). However, the list is not clearly defined.

Describes an example of a service used for the UE Member Selection Assistance functionality. For example, this service could be Nnef_ UEMemberSelectionAssistance service. This service may provide the ability to subscribe, unsubscribe or notify about member selection assistance information from the NEF.

The following describes the UE Member filtering criteria, referring to the examples in Table 3.

**[Table 3]**

| UE member filtering criteria | Description of filtering criteria |
|---|---|
| QoS and performance related information | |
| QoS configuration in PCF | Indicate the selected UEs should meet the required QoS in the specified areas. |
| QoS monitoring | Indicates monitored QoS performance for the selected UE should meet the threshold. |
| Expected QoS estimate in the area | Indicate the selected UE in a certain area regarding the QoS change statistics for an Analytics target period in the past or the likelihood of a QoS change for an Analytics target period in the future. |
| Throughput UL/DL | Indicate the bit rates for the selected UE should meet the threshold. |
| Packet transmission/ retransmission | Indicate the packet delay for the selected UE should meet the threshold. |
| UE Latency Performance | Indicate the UE latency performance that refers to a time delay for completing the transmission of a specific data volume between UE to AF. |

| Location related information | |
|---|---|
| UE current location | Indicate the certain area that the selected UE appears. |
| UE historical location | Indicate the certain area that the selected UE appeared in a historical period of time. |
| UE trajectory | Indicate the certain area trajectory that the selected UEs move in or out in the past or in the future. |
| UE direction | Indicate the selected UEs should include different moving direction. |
| UE separation distance | Indicate the selected UEs should comply with a minimum separation distance with each other. |

| UE status | |
|---|---|
| Number of UEs | Indicate the minimum number of candidate UEs that need to be fed back |
| UE mobility | Indicate whether the selected UE is moving out of the certain area. |
| CM state | Indicate the selected UE should in the CM-CONNECTED state |
| UE Reachability | Indicate the selected UE should reachable |
| UE Abnormal operation | Indicate the selected UE should have no abnormal operation. |
| UE access type/RAT type | Indicate the expected access type/RAT type the selected UE should stay, e.g.5G RAT or WLAN access. |

| PDU session attributes | |
|---|---|
| S-NSSAI, DNN | Indicate the S-NSSAI and DNN the selected UE should support. |
| MA PDU session | Indicate the selected UE should support the MA PDU session. |

For Minimum Number of UEs among the filtering criteria, this means the minimum number of UEs required by the application. The Application may provide different member selection criteria. The NEF must provide UE members that may satisfy the application's request. However, it is possible that the number of UE members provided by the NEF is significantly less than the number of UE members required by the Application. In this case, the Application cannot perform the desired Application operation. The application may request UE members from the NEF again, based on the new member filtering criteria, in order to select the required number of UEs.

An application may request to filter UE members according to different selection criteria until the desired number of UE members is satisfied. However, it is inefficient for an application (e.g., AF) to repeatedly request member selection assistance to obtain the desired number of UE members. In addition, network resources may be wasted.

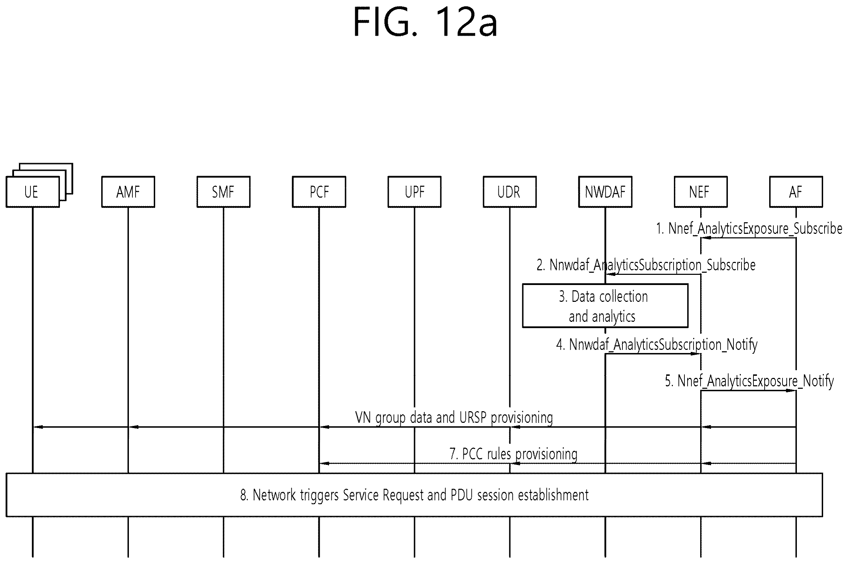

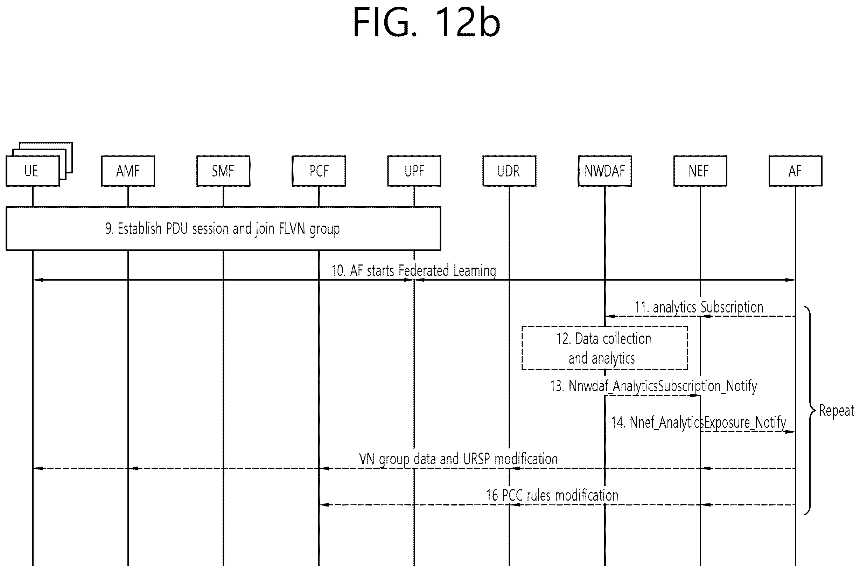

With respect to the problems and issues described above, the examples of FIGS. 12a and 12b may be applicable. In the examples of FIGS. 12a and 12b, an AF may request member selection from a 5G CN. When the AF makes the request, it may transmit a request message including a maximum and/or minimum number of members. However, no specific method is discussed on how the 5G CN may satisfy the AF's request.

The following drawings are intended to illustrate specific embodiments of the present disclosure. The designations of specific devices or the designations of specific signals/messages/fields shown in the drawings are for illustrative purposes only, and the technical features of the present disclosure are not limited to the specific designations used in the drawings below.

**FIGS. 12a** **and** **12b** **illustrate an example of a procedure for establishing a VN group by an AF.**

The examples in Figure 12a and Figure 12b are examples of solutions to address the issue "5GS support for federated learning operations".

Federated learning (FL) requires multiple rounds of training and interaction between a central server and edge nodes (e.g., edge servers or UEs). Federated learning may be viewed as a kind of group learning that does not expose the privacy of edge nodes. To improve the efficiency of federated learning, it is necessary to ensure more reliable connectivity between the edge nodes and the central server and consistency in the communication characteristics and requirements of each edge node, such as resources, bandwidth, delay, and uniform start and end of training.

The examples of FIG. 12a and FIG. 12b configure edge nodes and central servers of federated learning into 5G virtual network (VN) groups to achieve the following purposes. For example, it may facilitate unified management of members within a LAN group, resource allocation, flexible FL member addition and removal, group-level rule management, and coordination of access and mobility-related policies and session management-related policies.

The Network Data Analytics Function (NWDAF) provides the AF with a proposal for establishing a VN group with associated policies, and may also include a list of proposed FL members if the AF needs to select members.

The examples in Figure 12a and Figure 12b are one example of an AF-initiated VN group establishment procedure.
1. The AF may transmit messages to NEF to subscribe to analytics. For example, the AF subscribes to receive analytics through the NEF by calling the Nnef_AnalyticsExposure_Subscribe service operation. An example of the Nnef_AnalyticsExposure_Subscribe service operation may be defined in TS 23.502 [4]. The message transmitted by the AF may contain the following parameters
   - Analytics ID
   - Member selection flag: a flag indicating whether member selection is required
   - Analytics filter information, including:
      i) A list of members (a list of SUPIs or group IDs if the member selection flag is 0), a list of candidate members (a list of SUPIs or group IDs if the member selection flag is 1), or any UE (if the member selection flag is 1);
      ii) [Optional] Maximum and/or minimum number of members (if the member selection flag is 1);
      iii) Area of Interest.
      iv) S-NSSAI or DNN.
   - Expected time period
   - [Optional] Information about the ML model to be trained (e.g., model size).
   - [Optional] Performance requirements (e.g., bandwidth, latency, etc.).
2. based on the AF's subscription, the NEF may subscribe to the NWDAF by calling the Nnwdaf_AnalyticsSubscription_Subscribe service operation. Note that throughout the present disclosure, join and subscribe may be used interchangeably.
3. The NWDAF may collect data and perform analytics. If the member selection flag is 1 and user consent is given, the NWDAF may start selecting members from the list of candidate UEs provided by the AF. The NWDAF may perform "UE mobility analysis", "network data analysis related to anomalous operation", "network performance analysis", "NF load analysis", "user data congestion analysis", "DN performance analysis" and other analysis IDs to select appropriate members. Based on the analysis results, NWDAF may also suggest VN group data and auxiliary information for relevant policies.
4. The NWDAF may transmit analytics results to NEF by invoke the Nnwdaf_AnalyticsSubscription_Notify service operation.
5. The NEF invokes the Nnef_AnalyticsExposure_Notify service operation to notify AF of the analytics information.
6. Using the procedure specified in S4.15.6.7 of TS 23.502, the AF may transmit VN group data, as defined in S4.15.6.3b of TS 23.502, over the UDR. The PCF may generate URSP rules based on the VN group data. The PCF may communicate this to the UE using the procedure specified in S4.2.4.3 of TS 23.502.
7. The AF may transmit exclusive PCC rules for a group of VNs defined in TS 23.503 S6.3 to the PCF via UDR using the procedure specified in S4.15.6.7 of TS 23.502.
8. The AF may trigger the PDU session establishment procedure.
9. A UE that has previously received a URSP rule may establish a PDU session and join the VN group according to the procedure in S4.3.2.2.1 of TS 23.502.
10. Based on the configured VN group, the AF may start federated learning with the selected UEs.
11. During learning, the AF may transmit subscriptions to the NWDAF for network performance monitoring analytics of the member UE list, which may include "Network Performance Analytics", "UE Mobility Analytics", "User Data Congestion Analytics", "DN Performance Analytics", etc. The AF may also modify the candidate UE list and subscribe to analytics of the new candidate UE list, which may include the analysis IDs from step 3.
12. The NWDAF may collect data and perform analytics based on AF's subscriptions.
13. The NWDAF may notify NEF of the updated list of proposed members (if needed) and the results of the analysis by calling the Nnwdaf_AnalyticsSubscription_Notify service operation.
14. The NEF may invoke the Nnef_AnalyticsExposure_Notify service operation to notify the AF of analytics information.
15. The AF may modify the VN group data and/or members via UDR using the procedure specified in S4.15.6.7 of TS 23.502. The AF may change the list of candidate UEs based on internal decisions or analysis results. The AF may transmit a request to add or remove FL members at any time. The PCF modifies the URSP rules based on the VN group data and communicates them to the UE according to the procedure specified in S4.2.4.3 of TS 23.502.
16. The AF may modify the PCC rules for a VN group using the procedures specified in S4.15.6.7 of TS 23.502. FL operations may include multiple rounds of training. Depending on the AF's accession requirements to the NWDAF, steps 14-19 may be repeated multiple times.

According to the examples of FIG. 12a and FIG. 12b, the NWDAF may support application FL-related analytics (e.g., new analytics IDs);

The NEF may support receiving application FL-related subscriptions.

In the following, we describe various examples to address the various problems and issues described above.

The selection criteria for the number of UE members desired by the AF may vary in importance depending on the application operation. The AF may abandon some of the less important selection criteria to achieve a suboptimal application operation in order to achieve the desired application operation.

The AF may provide the NEF with a maximum number of UEs as filtering criteria. In this case, the NEF may not need to select UEs that meet all the filtering criteria without using more resources than necessary. If the NEF receives a Maximum/Minimum Number of UEs, the NEF may select a number of UEs that meet the Minimum number of UEs but do not exceed the Maximum number of UEs. The NEF may then provide the selected UE information to the AF.

Various examples in the present disclosure describe various examples for satisfying the minimum number of UEs required by the AF. For example, to satisfy these conditions, the 5GC may provide a list of candidate UEs as information to support application operation to the AF. For example, to provide a list of members that may satisfy the minimum number of UEs required by the AF, the 5GC (e.g., NEF) may apply importance to the member filtering criteria. For example, the 5GC (e.g., NEF) may apply multiple filtering criteria values for a single filtering criterion to provide a member list that satisfies the minimum number of UEs required by the AF. The importance of the member filtering criteria and the multiple filtering threshold values for one filtering criterion are based on the information provided by the AF. Based on these various examples, the information of the UEs provided by the 5GC (e.g., NEF) may satisfy the following conditions. For example, these UEs may satisfy the criteria based on the importance of the UE member selection criteria requested by the AF, and may satisfy the minimum number of UEs required by the AF.

The AF may also forward the priority of the UEs along with the UE list to the 5GC (e.g., NEF). The number of UEs satisfying the UE filtering criteria may exceed the maximum number of UEs. In this case, the 5GC may provide a list of UEs to the AF based on the UEs with higher priority.

Instead of providing a min/max number of UEs, the AF may also provide a request message to the 5GC containing information such as the expected number of UEs. In this case, the NEF may select a number of terminals within a range of values preset in the network based on the expected number of UEs. The specific operations will be described in the various examples below. Alternatively, the AF may pass a margin value. In this case, the 5GC may select a number of UEs within the margin value based on the expected number of UEs and provide the selected UEs to the AF.

The UE member selection method based on the importance of the UE member filtering criteria for the various proposed application operations in the present disclosure may comprise a combination of one or more of the following operations/configurations/steps

The operations described below may include, for example, operations requested by the AF and operations performed by the NEF at the request of the AF.

The various examples in the present disclosure describe operation based on the operation of the Nnef_UEMemberSelectionAssistance service over NEF.

The AF may request member selection based on the NEF service operation. For example, the AF may send a message to the NEF containing information such as a list of candidate UEs for member selection, one or more filtering criteria for filtering the list of UEs, and the minimum number of UEs required. Based on this, the AF may request member selection based on the NEF service operation.

An Application Server (e.g., AF) in the present disclosure may perform application-specific operation. For example, an application operation that requires a process of selecting multiple UEs may be required for a particular application operation. For example, an application operation may be a Federated Learning operation for AI/ML, i.e., an operation may be performed to train an AI/ML model using learning results from multiple terminals.

In the present disclosure, AI/ML Service is used interchangeably with AI/ML-based service, AI/ML traffic, AI/ML application, AI/ML transport, AI/ML operation, AI/ML operational traffic, Application AI/ML operation, Application AI/ML operational traffic, and the like.

User Equipment (UE) and Terminal are used interchangeably in the present disclosure.

Application Function (AF) and Application Server (AS) are used interchangeably in this document.

The present disclosure focuses on what is suggested by the various examples. The present disclosure omits description of techniques that are well known to those of ordinary skill in the art.

In the present disclosure, UE member is used interchangeably with member UE. Also, UE member selection is used interchangeably with member UE selection, UE selection, etc.

Embodiments [1] and [2] below may include opertions performed when the number of UEs meeting the UE filtering criteria requested by the AF does not meet the minimum number of UEs.

Embodiment [3] may be applied when the number of UEs that meet the UE filtering criteria requested by the AF does not meet (or exceeds) the maximum number of UEs requested by the AF. Alternatively, embodiment [3] may be applied when the AF satisfies the minimum number of UEs requested, but does not send a list of all UEs that satisfy the UE filtering criteria.

Embodiments [1], [2], and [3] may be combined. For example, in accordance with Embodiment [1], Embodiment [2], Embodiment [3] may be applied together if the number of UEs in the UE list that satisfy the UE filtering criteria and the minimum UEs is greater than the maximum UEs requested by the AF.

The following drawings are intended to illustrate specific embodiments of the present disclosure. The designations of specific devices or the designations of specific signals/messages/fields shown in the drawings are for illustrative purposes only, and the technical features of the present disclosure are not limited to the specific designations used in the drawings below.

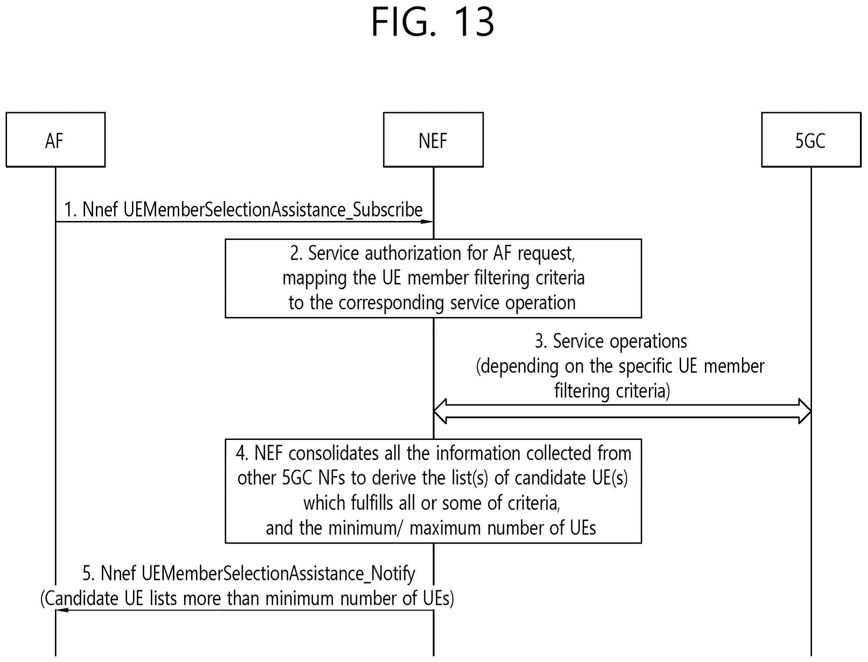

**FIG. 13** **is an example of a procedure according to the first embodiment or second embodiment of the present disclosure.**

The example of FIG. 13 includes an operation in which the AF requests the NEF to select a UE member. The example of FIG. 13 includes an example of UE member selection based on the importance of a member filtering criterion and multiple filtering criterion values.

FIG. 13 illustrates an example of operation based on Embodiment [1] and Embodiment [2]. For reference, as used herein, Embodiment [1] includes Embodiment [1-1] and Embodiment [1-2].

Referring to the example of FIG. 13, an example of how a member selection process by a NEF for an AF in a 5GC may satisfy a minimum number of UEs requested by the AF is described. For example, the example of FIG. 13 includes a member selection process based on importance of member filtering criteria provided by the AF, based on example embodiment [1]. For example, embodiment [1] includes an example based on a weight or priority according to embodiment [1-1], and an example based on an importance level (e.g., required/optional) according to embodiment [1-2]. For example, the example in FIG. 13 includes selecting a member with a selection method based on multiple filtering criteria values for one filtering criterion, based on embodiment [2].
1. The AF may transmit a subscription request message related to UE member selection assistance to the NEF. For example, the AF may transmit the message Nnef_UEMemberSelsctionAssistance_Subscribe to the NEF. The AF may request the NEF to subscribe to the UE member selection assistance functionality with a Nnef_UEMemberSelectionAssistance_Subscribe request. Specifically, the request message transmitted by the AF may include an initial UE list, UE member filtering criteria, and the minimum number of UEs required by the AF. Further, the request message may include information related to a selection method based on the importance of the member filtering criteria according to embodiment [1]. For example, the importance in embodiment [1] may include a weight or priority in embodiment [1-1], and an importance level (e.g., required/optional) in embodiment [1-2]. Further, the request message may include multiple filtering criteria values for some of the filtering criteria, according to embodiment [2].
2. The NEF may check whether or not to accept the AF's request. Based on the UE member filtering criteria received from the AF, the NEF may determine the information to be collected from the 5GC. Furthermore, the NEF may determine the service operation required to collect the information from the 5GC. The NEF may send a response message to the AF accepting the AF's subscription to the UE member selection assistance function.

For example, different filtering criteria may determine different information about the UE that needs to be collected. In order to collect information about a UE, the NEF may determine which service operations are required. For example, QoS monitoring of the UE may be required. In this case, the NEF may request the SMF to subscribe to events (Nsmf_EventEsposure service operation) and receive QoS information from the SMF. For another example, mobility related information may be required. Mobility-related information may be received from the AMF. Therefore, the NEF may subscribe to the Namf_EventExposure service operation for the AMF. Based on these examples, the interaction between the NEF and the 5GC NF may vary depending on the selection criteria in step 3.

3. The NEF may interact with various 5GC NFs to collect the necessary information. For example, interactions between NEFs and 5GC NFs may vary based on member selection criteria provided by the AF.

4. Based on the information collected from other 5GC NFs, the NEF may aggregate all the information collected. Based on the consolidated information, the NEF may derive a list of candidate UEs that fulfill the filtering criteria requested by the AF. If the number of candidate UEs is more than the minimum number requested by the AF, the NEF may decide to forward the candidate UEs to the AF as a list of UEs.

The number of candidate UEs may be less than the minimum number of UEs requested by the AF. In such a case, operations according to Embodiment [1] (e.g., including Embodiments [1-1] and [1-2]) and Embodiment [2] described below may be performed. For example, to satisfy the minimum number of UEs, based on the information included in the filtering criteria provided by the AF in step 1, the NEF may derive a list of candidate UEs that satisfy some of the filtering criteria while also satisfying the minimum number of UEs.

5. The NEF may transmit a message including the list of candidate UEs derived in step 4 to the AF. For example, the NEF may send the list of candidate UEs to the AF based on UEMemberSelectionAssistance_Notify. The message sent by the NEF may also contain additional information related to the member selection criteria.

Embodiment [1] will be described in detail. Embodiment [1] describes an example of a UE member selection method based on importance of member filtering criteria. Example [1] may include Embodiment [1-1] and Embodiment [1-2].

Embodiment [1-1] will be described.

Embodiment [1-1] is an example of how to apply weights or priorities to member filtering criteria.

The AF transmits the weights of the filtering criteria for member selection and the minimum number of UEs required to the NEF. The NEF selects UEs based on the filtering criteria that i) satisfy the minimum number of UEs (the minimum number of UEs requested by the AF) and ii) maximize the sum of the weights of the UE member filtering criteria.

For example, the NEF may perform member selection based on conditions such as the following example:
- Minimum number of UEs required: 100
- Filtering criteria transmitted by the AF: Example in Table 4

**[Table 4]**

| | #1 | #2 | #3 | #4 |
|---|---|---|---|---|
| Filtering criteria | Throughput> 10Mbps | Delay < 100ms | Location within A area | Access Type = 3GPP |
| Weights | 5 | 7 | 2 | 1 |

The NEF may select UEs based on a minimum number of 100 UEs and the filtering criteria in Table 4. For example, the NEF may receive four filtering criteria from the AF. Then, the AF may request the NEF to provide a list of at least 100 UEs.

The NEF may select UEs from the list of UEs forwarded by the AF that satisfy all conditions #1, #2, #3, and #4 above (weighted sum = 15). For example, only 50 UEs may be selected that fulfill the filtering criteria. Since the minimum number of 100 UEs is not met, the NEF may again select UEs based on the remaining filtering criteria, excluding the condition with the lowest weight (e.g. Access type =3GPP).

For example, in the above example, after excluding criterion #4, the NEF will select the UEs that satisfy the remaining filtering criteria (#1, #2, #3) (sum of weights = 14) and check the number of selected UEs. For example, if 80 UEs are selected and do not meet the minimum number of required UEs, the NEF should continue the selecting process with a different combination of filtering criteria items.

Next, the NEF may select the UEs that satisfy the conditions (#1, #2, #4) to maximize the sum of the weights (sum of weights = 13) and check the number of UEs. If the number of UEs satisfying these conditions (#1, #2, #4) is found to be 110, which satisfies the minimum number of required UEs, the NEF forwards the list of UEs satisfying the conditions to the AF. In this case, the NEF may also forward the selected filtering criteria (#1, #2, #4) to the AF together.

If the number of UEs selected based on criteria (#1, #2, #4) (sum of weights = 13) is also less than 100, the NEF may select UEs based on criteria (#1, #2) (sum of weights = 12). Then, if the minimum number of UEs is still not met, the NEF may select a list of UEs that may meet the minimum number of UEs in the order of criteria (#2, #3, #4).

The AF may also pass the consensus minimum of the weights to the NEF. In this case, the NEF may forward an error message to the AF if it is impossible to select UEs that satisfy both the minimum of the weights and the required minimum number of UEs.

Priorities may be used instead of weights. For example, in the example in Table 4, assume that the #1, #2, #3, and #4 criteria have priorities of 1, 2, 3, and 4, respectively. The NEF may first check all criteria (#1, #2, #3, #4) and then determine whether the number of selected UEs is greater than the minimum number of UEs. If the number of selected UEs is less than the minimum number of UEs, the NEF may select the UEs, removing the lowest priority condition #4 first. The NEF may then check whether the number of selected UEs satisfies the minimum number of UEs. For example, the NEF may check for UEs that satisfy the conditions in the order (#1, #2, #3), (#1, #2), (#1). If the number of UEs satisfying only the highest priority does not satisfy the minimum number of UEs required by the AF, the NEF may forward an error message to the AF.

### Describe Embodiment [1-2].

In Embodiment [1-2], a method for categorizing member filtering criteria by importance level is described.

The AF may categorize member filtering criteria by level of importance.

For example, if the AF categorizes into two categories, it may divide into Mandatory (or Required) and Optional. The AF may send information to the NEF about the mandatory and optional parts of the filtering criteria.

Example 1. The NEF may select UEs that meet all filtering criteria, both required and optional. If the number of selected UEs is more than the minimum number of UEs required by the AF, the NEF may forward the list of selected UEs to the AF.

Example 2. The NEF may select UEs that satisfy the filtering criteria for the required items. The number of selected UEs may be less than the minimum number of UEs required by the AF. In this case, the NEF may send an error message to the AF stating that the number of UEs satisfying the filtering criteria for the mandatory item is less than the minimum number of UEs required.

Example 3. The number of UEs that satisfy the filtering criteria in the required field may be more than the minimum number of UEs required for the AF. And the number of UEs that satisfy all the filtering criteria, including the required and optional ones, may be less than the minimum number of UEs required. In this case, the NEF may further select UEs that satisfy some of the filtering criteria in the optional category from the UEs that satisfy the required criteria.

Example 4. Weights or priorities may also be used for selections as in Embodiment [1-1]. For example, the AF may send weights and/or priorities for the filtering criteria of the selection to the NEF. The NEF may select UEs that satisfy the UE filtering criteria of the selection while satisfying the minimum number of UEs.

Below, we describe examples of minimum number of UEs and filtering criteria. Examples include
- Minimum number of UEs required: 100
- The filtering criteria transmitted from AF is as shown in the example in Table 5:

**[Table 5]**

| | #1 | #2 | #3 | #4 |
|---|---|---|---|---|
| Filtering criteria | Throughput> 10Mbps | Delay < 100ms | Location within A area | Access Type = 3GPP |
| Category | Mandatory (Required) | Mandatory (Required) | Optional | Optional |
| Weights | N/A | N/A | 2 | 1 |

In the above example, the number of UEs that satisfy all conditions (#1, #2, #3, #4) may be more than 100. The NEF will then pass the list of selected UEs to the AF.

If the number of UEs satisfying the conditions (#1, #2, #3, #4) is less than 100, the NEF may select the UEs that satisfy the mandatory criteria (#1, #2). The NEF shall check that the number of selected UEs is equal to or bigger than 100.

For example, if there are less than 100 UEs satisfying the conditions in (#1, #2), the AF cannot fulfill the requested conditions. In this case, the NEF forwards an error message to the AF. If there are more than 100 UEs that satisfy the conditions in (#1, #2), the NEF may check the UEs that satisfy the filtering criteria in the selection.

Since we have already checked that the number of UEs satisfying condition (#1,#2,#3,#4) is less than 100 by considering the sum of the weights of the selections, the NEF checks if there are more than 100 UEs satisfying condition (#1,#2,#3) for which the sum of the weights is maximized. If there are more than 100 UEs, they are forwarded to the AF because they satisfy the minimum number of UEs required by the AF. If not, you may check additional conditions (#1, #2, #4).

Embodiment [2] will be described in detail. Embodiment [2] includes an example of passing multiple filtering values for one filtering criterion.

The AF may use multiple filtering criteria values for one filtering selection criterion. For example, the AF may transmit the NEF one or more filtering threshold values for criteria for filtering UEs that satisfy a certain QoS. For example, if the number of UEs satisfying the first threshold value is less than the minimum number of UEs required by the AF, the NEF may check the number of UEs satisfying the second threshold value. For example, if the number of UEs satisfying the second threshold is less than the minimum number of UEs required by the AF, the NEF may check the number of UEs satisfying the third threshold and select the UEs. In this example, the NEF may check the first criterion sequentially. The AF sends the criteria values to the NEF in order of priority, starting with the criteria value that it wants most.

The example in Table 6 is an example of a filtering criteria that includes one or more criteria values.

**[Table 6]**

| | #1 | #2 | #3 | #4 |
|---|---|---|---|---|
| Filtering criteria | Throughput | Delay < 100ms | Location within A area | Access Type = 3GPP |
| | 1) > 10Mbps | | | |
| | 2) > 5Mbps | | | |
| | 3) > 3Mbps | | | |

In this case, the NEF may determine whether there are fewer UEs satisfying the four filtering conditions (i.e., #1 of #1), #2, #3, and #4) than the minimum number of UEs requested by the AF. If these UEs are less than the minimum number of UEs, the NEF does not know whether the four filtering conditions (e.g., 2) of #1, #2, #3, and #4), which include conditions after the condition 1) of #1, are important or whether the other conditions are important. Here, the other condition could be conditions (e.g., 1) of #1, #2, #3) except #4, for example. When it is unclear which condition is important, a method in combination with Embodiment [1] may be used.

For example, filtering selection criteria for the filtering selection criteria of embodiment [1-1] or the selection criteria of embodiment [1-2] may be used. For example, each filtering criteria item may be subject to filtering selection criteria with different criteria values and weights for one filtering selection criteria.

As shown in the example in Table 7 below, AF may configured throughput QoS and Delay QoS as the mandatory item.

**[Table 7]**

| | #1 | #2 | #3 | #4 |
|---|---|---|---|---|
| Filtering criteria | Throughput | Delay< 100ms | Location within A area | Access Type = 3GPP |
| Category | Mandatory (Required) | Mandatory (Required) | Optional | Optional |
| Weights | 5 (> 10Mbps)4 (> 5Mbps) 3 (> 3Mbps) | N/A | 2 | 1 |

In the example in Table 7, the Delay QoS must be satisfied. Throughput QoS is also mandatory and must be included in the UE filtering criteria. However, it includes weights of 5, 4, and 3. For example, the AF may set the weight of the criteria with a throughput of 10 Mbps or more to 5, the weight of the criteria with a throughput of 5 Mbps or more to 4, and the weight of the criteria with a throughput of 3 Mbps or more to 3. Based on the weights set by the AF, NEF may apply filtering selection criteria.

Embodiments [1] and [2] described above may be applied individually. Alternatively, Embodiments [1] and [2] may be combined. Based on the method according to Embodiment [1], Embodiment [2], and/or a combination of Embodiment [1] and Embodiment [2], the NEF may determine whether a required minimum number of UEs may be satisfied based on the member selection filtering importance of the UEs. If the minimum number of UEs cannot be ultimately satisfied, the NEF may send an error message to the AF.

For each of Embodiment [1], Embodiment [2], and/or the method by a combination of Embodiment [1] and Embodiment [2], the NEF may satisfy a minimum number of UEs required based on the importance of the UEs to the member selection filtering. In such case, the NEF may forward the list of such UEs together with the information of the filtering criteria met to the AF.

Even if the AF does not provide the importance of the member filtering criteria (e.g., weight, priority, required/optional) and multiple filtering criteria values, the 5GC may set the weights and priorities based on information preconfigured between the AF and the 5GC or preset by the 5GC, and perform operation based on these configurations.

In the various examples, the filtering criteria are described as being categorized into two levels of importance, but this is for illustrative purposes only. The scope of the present disclosure is not limited by the two categorizations, and the filtering criteria may be provided/expressed in various forms/levels. For example, three classifications may be used. The three categorizations may be, for example, must be considered, recommended for consideration, and may be considered.

Embodiment [3] is described.

Embodiment [3] includes a method of providing a priority to a list of (initial or target) UEs requested/provided by the AF.

The AF may configure a priority to the UE based on the UE's characteristic information (e.g., processing power, capability, battery level, location, mobility, etc.). The AF may obtain the above characteristic information from the UE based on the operation of the application layer associated with the UE, or may obtain the above characteristic information from the 5G CN.

The following drawings are intended to illustrate specific embodiments of the present disclosure. The designations of specific devices or the designations of specific signals/messages/fields shown in the drawings are for illustrative purposes only, and the technical features of the present disclosure are not limited to the specific designations used in the drawings below.

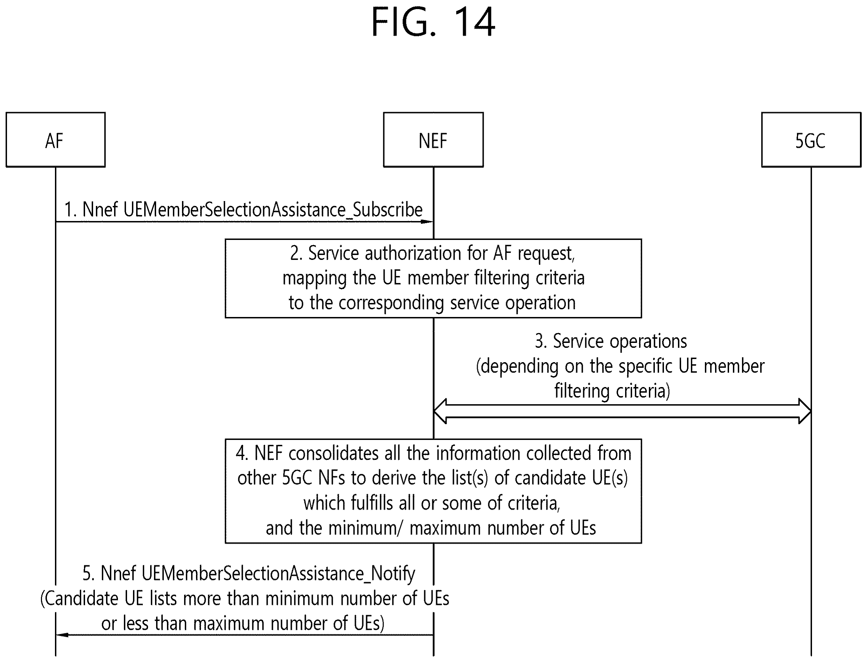

**FIG. 14** **is an example of a procedure according to the third embodiment of the present disclosure.**

The example in Figure 14 includes a selection operation based on the priority of the UE list.

FIG. 14 illustrates an example of operation based on Embodiment [3]. For reference, in the following, Embodiment [3] includes Embodiment [3-1] and Embodiment [3-2].

Referring to the example of FIG. 14, an example of how the NEF selects members for the AF in the 5GC to satisfy the maximum number of UEs requested by the AF is illustrated. For example, the example of FIG. 14 includes a process where, based on Embodiment [3], the AF provides a priority for UEs in the UE List (e.g., a priority for an individual UE in Embodiment [3-1]and a priority for a bundle (group) of UEs in Embodiment [3-2]), and the NEF selects UEs based on the priority.
1. The AF may transmit a subscription request message related to UE member selection assistance to the NEF. For example, the AF may send the message Nnef_UEMemberSelsctionAssistance_Subscribe to the NEF. The AF may request the NEF to subscribe to the UE member selection assistance functionality with a UEMemberSelectionAssistance_Subscribe request. Specifically, the request message transmitted by the AF may include an initial UE list, UE member filtering criteria, and a minimum or maximum number of UEs required by the AF. Further, the request message may include a priority for the UEs in the UE list according to embodiment [3]. For example, the priority according to embodiment [3] may include a priority for an individual UE in embodiment [3-1], a priority for a bunch (group) of UEs in embodiment [3-2].
2. The NEF may check whether or not to accept the AF's request. Based on the UE member filtering criteria received from the AF, the NEF may determine the information to be collected from the 5GC. Furthermore, the NEF may determine the service operation required to collect the information from the 5GC. The NEF may send a response message to the AF accepting the AF's subscription to the UE member selection assistance function.

For example, depending on the filtering criteria, the information about the UE that needs to be collected may vary. In order to collect information about a UE, the NEF may determine which service operations are required. For example, QoS monitoring of the UE may be required. In this case, the NEF may request the SMF to subscribe to events (Nsmf_EventEsposure service operation) and receive QoS information from the SMF. For another example, mobility related information may be required. Mobility-related information may be received from the AMF. Therefore, the NEF may subscribe to the Namf_EventExposure service operation for the AMF. Based on these examples, the interaction between the NEF and the 5GC NF may vary depending on the selection criteria in step 3.

3. The NEF may interact with various 5GC NFs to gather the necessary information. For example, interactions between NEFs and 5GC NFs may vary based on member selection criteria provided by the AF.

4. Based on the information collected from other 5GC NFs, the NEF may aggregate all the information collected. Based on the aggregated information, the NEF may derive a list of candidate UEs that fulfill the filtering criteria requested by the AF. If the number of candidate UEs is more than the minimum number requested by the AF, the NEF may determine the candidate UEs as a list of UEs to be transmitted to the AF.

The number of derived UEs may be higher than the minimum number of UEs requested by the AF. In this case, based on the priority information of UEs provided by the AF in step 1, the NEF may not select all UE members that meet the conditions, but only the NEF may select the minimum number of UEs with high priority. If the number of derived UEs is more than the maximum number of UEs requested by the AF, the NEF may select the UEs that are less than the maximum number of UEs in order of their higher priority. In Step 4, the UE selection operation according to the priority is according to Example [3-1] and Example [3-2].

5. The NEF may transmit a message including the list of candidate UEs derived in step 4 to the AF. For example, based on UEMemberSelectionAssistance_Notify, the NEF may transmit the list of candidate UEs to the AF. The message transmitted by the NEF may also include additional information related to the member selection criteria.

Embodiment [3-1] is described.

Example [3-1] includes the operation of providing a priority of an individual UE to (initial or target) UE list requested/provided by the AF.

The AF may transmit individual priority information of UEs to the NEF along with the UE list.

For example, based on the UE priority, the NEF may check whether the UE filtering criteria are met starting from the UEs with higher priority. If the number of UEs that meet the priority criteria is greater than or equal to the minimum UE, the NEF may transmit a list of those UEs and the satisfied filtering criteria information to the AF.

In another example, the NEF may first filter UEs that meet the filtering criteria for all UEs regardless of the priority the UEs. The number of filtered UEs may exceed the Maximum number of UEs requested by the AF. In this case, the NEF may select the UEs in order from highest priority to lowest priority. The NEF may transmit a list of UEs that are less than the maximum number of UEs requested by the AF and information related to the satisfied filtering criteria to the AF.

The NEF may categorize the UE list into several groups based on the order of UE priority. For each high priority group, the NEF may check if the UE filtering criteria is met. If the number of UEs that meet the priority criteria exceeds the Minimum UEs, the NEF may not select the remaining groups. The NEF may send the list of UEs that meet the priority criteria and the filtering criteria met to the AF.

Embodiment [3-2] is described.

Embodiment [3-2] includes the operation of providing a priority for a bundle of UEs in the (initial or target) UE List requested/provided by the AF.

The AF may configure a priority for a group of UEs without prioritizing each UE. The AF may provide the NEF with a list containing the priorities of groups of UEs. For example, an AF may transmit a list of 500 UEs with UE filtering criteria to the NEF. In this case, the AF may transmit information that 100 UEs are the highest priority UEs with priority 1, the next 200 UEs with priority 2, and the next 200 UEs with priority 3, along with the filtering criteria, to the NEF.

**[Table 8]**

| priority | 1 | 2 | 3 |
|---|---|---|---|
| UE number | #1 ~ #100 | #101~300 | #301~500 |

For example, the AF may configure priority information for a group of UEs as shown in the example in Table 8 and transmit it to the NEF,.

The UE number may also indicate the order/sequence in the UE list. Alternatively, the AF may provide the UE list in the form of the example in Table 9 below.

**[Table 9]**

| priority | 1 | 2 | 3 |
|---|---|---|---|
| In the UE list, in order | First 100 UEs | Next 200 UEs | Remaining UEs |

In Embodiment [3-2], specific operations may be performed in a similar manner to Embodiment [3-1]. For example, the NEF may perform filtering for UEs in the high priority group first. Then, the NEF may sequentially perform filtering for the next priority batch of UEs. The NEF may filter (or select) until a number of UEs are selected that satisfy the minimum number of UEs.

Alternatively, the NEF may check the filtering criteria for all UEs and if the maximum number of UEs is exceeded, the NEF may select the UEs with higher priority. The NEF may send a list of the selected UEs to the AF.

If some UEs with the same priority need to be selected in order not to exceed the maximum number of UEs, the NEF may randomly select UEs.

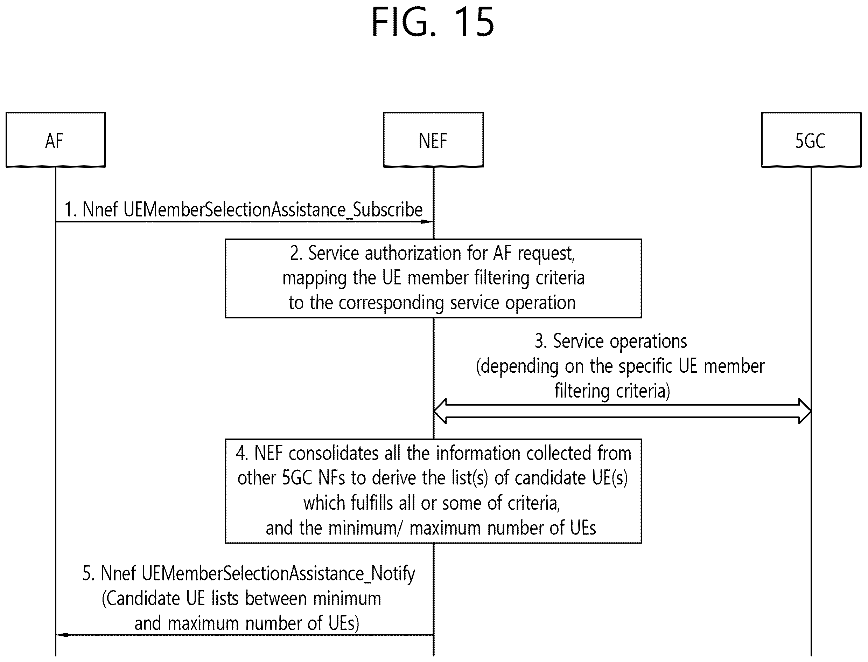

Hereinafter, with reference to FIG. 15, one example of operation combining one or more of embodiments [1] to [3] is described.

The following drawings are intended to illustrate specific embodiments of the present disclosure. The designations of specific devices or the designations of specific signals/messages/fields shown in the drawings are for illustrative purposes only, and the technical features of the present disclosure are not limited to the specific designations used in the drawings below.

**FIG. 15** **is an example of a procedure combining one or more embodiments of the present disclosure.**

One or more of embodiments [1], [2], and [3] may be combined. The AF may transmit to the NEF the information provided in at least one of embodiment [1], embodiment [2], and/or embodiment [3], together with a minimum number of UEs and a maximum number of UEs. The specific operation is as follows

The example in FIG. 15 is described below, focusing on the differences between FIGS. 13 and 14 and FIG. 15. The operations that are common to Figures 13 and 14 will not be described.

In Step 1, the AF may transmit filtering criteria and a UE List comprising the information described in Examples [1], [2], and [3] to the NEF. The AF may also transmit the required minimum/maximum number of UEs to the NEF. For example, in step 1, the AF may include weights or priorities according to embodiment [1-1], and/or an importance level (e.g., required/optional) according to embodiment [1-2], and/or a plurality of filtering criteria values for some of the filtering criteria according to embodiment [2], and/or a priority of each UE according to embodiment [3-1], and/or a priority level of a group of UEs according to embodiment [3-2], and/or a minimum number of UEs and/or a maximum number of UEs in the message of step 1.

For Step 4, the NEF internally checks the filtering conditions for all UEs first and follows the procedure below based on the results. 1), 2-1), 2-2), and 3) below are examples of specific operations performed by the NEF.
1) If the number of UEs satisfying all conditions is more than or equal to the minimum number of UEs requested by the AF and less than or equal to the maximum number of UEs, the NEF may select those UEs as UEs to be transmitted to the AF.
2-1) If the number of UEs derived in step 1 exceeds the maximum number of UEs, Embodiment [3] may be applied. By applying Embodiment [3], the NEF may select UEs that are below the maximum number of UEs and above the minimum number of UEs as UEs to be forwarded to the AF.
2-2) The number of UEs derived in step 1 may be less than the minimum number of UEs. In this case, Embodiment [1] and/or Embodiment [2] may be applied. The NEF may derive more than or equal to the minimum number of UEs. If the derived UEs are less than or equal to the maximum number of UEs, the NEF may select those UEs as the UEs to be delivered to the AF.
3) If the number of UEs derived in step 2-2 exceeds the maximum number of UEs, Embodiment [3] may be applied. The NEF may derive a number of UEs that is greater than or equal to the minimum number of UEs and less than or equal to the maximum number of UEs.

The following drawings are intended to illustrate specific embodiments of the present disclosure. The designations of specific devices or the designations of specific signals/messages/fields shown in the drawings are for illustrative purposes only, and the technical features of the present disclosure are not limited to the specific designations used in the drawings below.

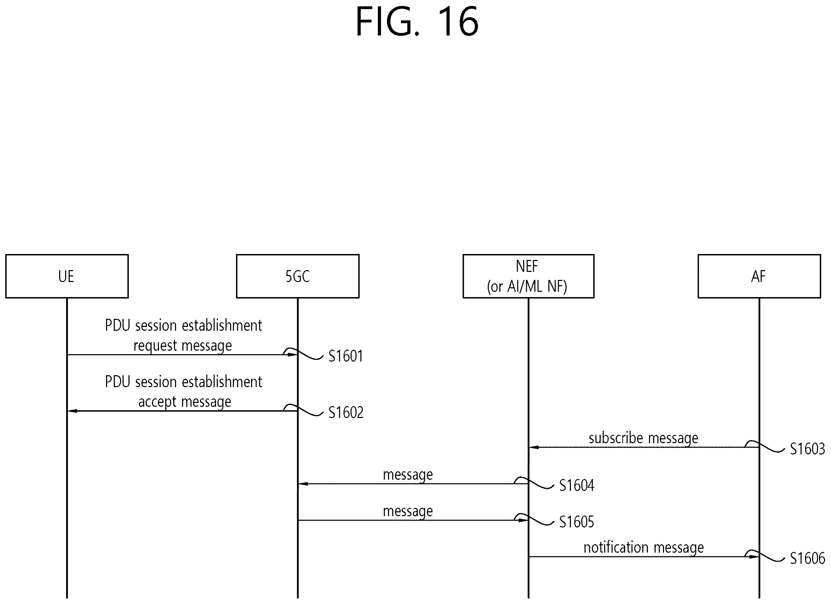

**FIG. 16** **is an example of a procedure performed according to one embodiment of the present disclosure.**

It should be noted that the procedure shown in FIG. 16 is illustrative only, and the scope of the present disclosure is not limited by the example in FIG. 16.

For example, for the example of FIG. 16, the operation described in the examples of FIGS. 1 through 15 may also be applied. For example, any operation, content, etc. described in the various examples of the present disclosure may be applied, even if the operation, content, etc. is not directly described in the example of FIG. 16. For example, the various operations described in embodiments [1] through [3] of the present disclosure may be performed.

In the example of FIG. 16, step S1601 and step S1602 are illustrative examples of a procedure for establishing a PDU session according to the examples of FIGS. 5 and 6.

In step S1601, the UE may transmit a PDU session establishment request message to the SMF. The 5GC may include the SMF. Also, in the example of FIG. 16, the 5GC and the NEF are shown as separate objects, but this is for illustrative purposes only. The NEF may also be included in the 5GC.

In step S1602, the SMF included in the 5GC may transmit a PDU session establishment acceptance message to the UE.

In the following, the UE may refer to a UE with a PDU session. For example, a UE having a PDU session may be used for application operation because the UE's PDU session establishment request message has been transmitted. For example, the transmission of the UE's PDU session establishment request message may trigger step S1603 below.

In step S1603, the AF may transmit a subscription message to the NEF. The subscription message may be, for example, a subscription request message. The subscription message may be a subscription message related to UE member selection assistance, for selecting UEs for an application operation. The application operation may include a federated learning operation based on AI/ML.

The subscription message may include a plurality of information. For example, the subscription message may include: i) a minimum number and/or maximum number of UEs, and ii) a weighting factor of one or more filtering criteria to filter UE members. The subscription message may also include a list of UEs (e.g., an initial UE list). The subscription message may further include importance information of the one or more filtering criteria. For example, the subscription message may further include a plurality of filtering criteria that are included in at least one filtering criterion of the one or more filtering criteria. The subscription message may further include a list of UEs including one or more UEs, one or more UE groups, and priority information of the UE groups.

Based on the subscription message, the NEF may determine a list of candidate UEs.

For example, based on the minimum number of UEs and the weighting factor, the NEF may apply all or some of the one or more filtering criteria such that the number of UEs included in the list of candidate UEs is greater than or equal to the minimum number of UEs.

For example, based on the maximum number of UEs and the weighting factor, the NEF may apply all or some of the one or more filtering criteria such that the number of UEs included in the list of candidate UEs is less than or equal to the maximum number of UEs.

For example, based on the minimum number of UEs, the maximum number of UEs, and the weighting factor, the NEF may apply all or some of the one or more filtering criteria such that the number of UEs included in the list of candidate UEs is less than or equal to the maximum number of UEs and greater than or equal to the minimum number of UEs.

For example, based on the importance information, the NEF may prioritize the UEs that satisfy the high importance filtering criteria.

For example, based on the plurality of filtering criteria, the NEF may select UEs that preferentially satisfy a filtering criterion with higher priority among the plurality of filtering criteria.

For example, based on the one or more UE groups and the priority information of the UE groups, the NEF may select from the UE groups with higher priorities such that the number of UEs included in the list of candidate UEs is at least the minimum number of the UEs.

In step S1604, the NEF may transmit messages to interact with the various 5GC NFs to collect the required information. For example, interactions between NEFs and 5GC NFs may vary based on member selection criteria provided by the AF.

In step S1605, based on the request message received in step S1604, the 5GC may collect the necessary information of the target member UE and transmit the collected information to the NEF.

In step S1606, the NEF may transmit a notification message to the AF. The notification message may be a message related to UE member selection assistance. The notification message may include a list of candidate UEs.

Based on the list of candidate UEs, the AF may utilize one or more UEs to perform the above application operation.

According to various embodiments of the present disclosure,

The operation proposed in the present disclosure may support Application operation (e.g., AI/ML FL). For example, it may be supported by NEFs and AFs that provide member selection assistance to provide a list of UEs to the application.
1) The AF may provide a list of UEs when requesting assistance information to 5GC for member selection for application operation. The AF may request the criteria required for UE filtering and the minimum number of UEs required by the application.

The AF may provide the 5GC with an importance value for each UE filtering criterion as a weight and priority. The AF may also provide different filtering criteria values to the 5GC for each UE filtering criterion.

The AF may also provide filtering criteria to NEFs, herein the filtering criteria may be separated as required and optional.

The AF may also provide the 5GC with multiple filtering values for a single filtering criterion.

Requests from AFs may be forwarded to NEFs.

2) The NEF may verify that the number of UEs satisfying all UE filtering criteria meets the minimum number of UEs requested by the AF. Multiple filtering values may exist for a single filtering selection criterion. In this case, the NEF may check the criterion value that corresponds to the highest weight or the highest priority first.

If the number of UEs that meet all the UE filtering criteria requested by the AF does not meet the minimum number of UEs requested by the AF, additional operations may be performed.

3) The NEF may select UEs by considering the weights or priorities requested by the AF. For example, the NEF may consider filtering criteria that satisfy some UE filtering criteria while also satisfying a minimum number of UEs. The NEF may then check the number of UEs that satisfy these criteria.
- Weights may be used. In this case, the NEF may select UEs based on the filtering criteria that maximizes the sum of the weights of the UE member filtering criteria while satisfying the minimum number of UEs.
- When prioritization is used, the NEF may select UEs while excluding UE filtering criteria with lower priority. The NEF may select UEs so that the number of UEs satisfying the high priority UE filtering criteria is at least the minimum number of UEs requested by the AF.
- The filtering criteria may also be divided into mandatory and optional. In this case, mandatory criteria may be required to be included in the UE selection filtering criteria. The NEF may select filtering criteria based on weighting or prioritization for optional criteria.
- The AF may also break down a single filtering criteria into multiple criteria values. The AF may also apply weights or priorities to each criterion. Based on these examples, NEFs may select filtering criteria.

4) The NEF may forward an error message to the AF if it is impossible to provide a UE List that satisfies the UE filtering criteria and minimum number of UEs provided by the AF.

5) The NEF may provide a list of UEs that satisfy the UE filtering criteria and minimum number of UEs provided by the AF. In this case, the NEF may send the list of UEs together with the filtering criteria used for UE selection.

6) The NEF may utilize the priority information of individual UEs included in the (initial or target) UE List requested/provided by the AF or the priority information of a group of UEs. Accordingly, the NEF may prioritize UEs with high priority and select UEs that meet the UE filtering criteria. The NEF may select UEs that are more than the minimum number of UEs requested by the AF and less than the maximum number of UEs. The NEF may then transmit the UE list and the filtering criteria used to select UEs to the AF.

7) Instead of the AF transmitting the min / max number of UEs to the NEF, the AF may also make a request in the form of expected number of UEs. In this case, based on the expected number of UEs, the NEF may select a number of terminals within a preset value range in the network. The NEF may then provide the selected UEs to the AF. Alternatively, the AF may provide a margin value to the NEF. In this case, the NEF may select a number of terminals within the margin value based on the expected number of UEs. The NEF may then provide the selected UEs to the AF.

8) The Application Server may select the final UEs to participate in the application operations, based on the list of UEs and. The AS may request network resources from the 5GS to perform the application operation for the selected UEs.

The present disclosure may have various effects.

For example, an AS (or AF) may provide the minimum number of UEs required and UE member filtering criteria when requesting UE list information from the 5GS for an application operation (e.g. FL operation). In this case, the AS may also convey weighting or prioritization information on the importance of the UE member filtering criteria. The AS may also provide multiple filtering criteria values for a single filtering criterion, together with weighting or prioritization information. Then, the NEF may configure a UE member list that satisfies some of the filtering criteria and satisfies a minimum number of UEs, based on the importance of the filtering criteria. The NEF may then transmit the list of UE members to the AF. This allows the AF to effectively obtain a list of UEs with the minimum number of UEs required. The AF may obtain the UE list information required for AF operation without repeatedly requesting the UE member selection assistance functionality. The NEF may also save resources to unnecessarily filter out UEs beyond the maximum number of UEs required by the AF. FL operation may be performed efficiently. It also avoids wasting network resources.

Based on the information transmitted by the NEF, the Application Server may select UEs to participate in the application operation (e.g. FL). The AS may request network resources for the application operation from the 5GS.

The effects that may be obtained from the specific examples of the present disclosure are not limited to those listed above. For example, there may be a variety of technical effects that a person having ordinary skill in the related art may understand or infer from the present disclosure. Accordingly, the specific effects of the present disclosure are not limited to those expressly set forth herein, but may include a variety of effects that may be understood or inferred from the technical features of the present disclosure.

For reference, the operation of the terminal (e.g., UE) described in the present specification may be implemented by the apparatus of FIGS. 1 to 4 described above. For example, the terminal (e.g., UE) may be the first device 100 or the second device 200 of FIG. 2. For example, an operation of a terminal (e.g., UE) described herein may be processed by one or more processors 102 or 202 . The operation of the terminal described herein may be stored in one or more memories 104 or 204 in the form of an instruction/program (e.g., instruction, executable code) executable by one or more processors 102 or 202 . One or more processors 102 or 202 control one or more memories 104 or 204 and one or more transceivers 105 or 206, and may perform the operation of the terminal (e.g., UE) described herein by executing instructions/programs stored in one or more memories 104 or 204.

In addition, instructions for performing an operation of a terminal (e.g., UE) described in the present disclosure of the present specification may be stored in a non-volatile computer-readable storage medium in which it is recorded. The storage medium may be included in one or more memories 104 or 204. And, the instructions recorded in the storage medium may be executed by one or more processors 102 or 202 to perform the operation of the terminal (e.g., UE) described in the present disclosure of the present specification.

For reference, the operation of a network node (e.g., AMF, SMF, UPF, PCF, AI/ML Application Server (AS), AIML NF, AIML NF/NEF, NEF, UDM, DN, NWDAF, UDR, new NF etc.) or base station (e.g., NG-RAN, gNB, etc.) described herein may be implemented by the apparatus of FIGS. 1 to 3 to be described below. For example, a network node or a base station may be the first device 100 of FIG.2 or the second device 200 of FIG.2. For example, the operation of a network node or base station described herein may be processed by one or more processors 102 or 202. The operation of the terminal described herein may be stored in one or more memories 104 or 204 in the form of an instruction/program (e.g., instruction, executable code) executable by one or more processors 102 or 202. One or more processors 102 or 202 may perform the operation of a network node or a base station described herein, by controlling one or more memories 104 or 204 and one or more transceivers 106 or 206 and executing instructions/programs stored in one or more memories 104 or 204.

In addition, instructions for performing the operation of the network node or base station described in the present disclosure of the present specification may be stored in a non-volatile (or non-transitory) computer-readable storage medium. The storage medium may be included in one or more memories 104 or 204. And, the instructions recorded in the storage medium are executed by one or more processors 102 or 202, so that the operations of a network node or base station are performed.

In the above, preferred embodiments have been exemplarily described, but the present disclosure of the present specification is not limited to such specific embodiments, and thus, modifications, changes, or may be improved.

In the exemplary system described above, the methods are described on the basis of a flowchart as a series of steps or blocks, but are not limited to the order of the steps described, some steps may occur in a different order or concurrent with other steps as described above. In addition, those skilled in the art will understand that the steps shown in the flowchart are not exclusive and that other steps may be included or that one or more steps of the flowchart may be deleted without affecting the scope of rights.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method.

## Claims

1. A method for performing communication, the method performed by an Application Function (AF) and comprising:
transmitting a subscription message related to UE member selection assistance to a Network Exposure Function (NEF), in order to select User Equipment (UE) for application operation; and
receiving a notification message related to the UE member selection assistance from the NEF,
wherein the notification message includes a list of candidate UEs,
wherein the subscription message includes i) a minimum number and/or a maximum number of UEs, and ii) a weighting factor of one or more filtering criteria for filtering UE members.

2. The method of claim 1,
wherein the application operation includes a federated learning operations based on Artificial Intelligence/Machine Learning (AI/ML).

3. The method of claim 1 or 2, further comprising:
performing the application operation using one or more UEs, based on the list of candidate UEs,.

4. The method of any one of claims 1 to 3,
wherein the minimum number of UEs and the weighting factor, are used by the NEF to apply all or some of the one or more filtering criteria, such that the number of UEs included in the list of candidate UEs is equal to ore bigger than the minimum number of UEs.

5. The method of any one of claims 1 to 4,
wherein the maximum number of UEs and the weighting factor are used by the NEF to apply all or some of the one or more filtering criteria, such that the number of UEs included in the list of candidate UEs is less than or equal to the maximum number of UEs.

6. The method of any one of claims 1 to 5,
wherein the minimum number of UEs, the maximum number of UEs, and the weighting factor are used by the NEF to apply all or some of the one or more filtering criteria, such that the number of UEs included in the list of candidate UEs is less than or equal to the maximum number of UEs and greater than or equal to the minimum number of UEs.

7. The method of any one of claims 1 to 3,
wherein the subscription message further includes importance information of the one or more filtering criteria, wherein the importance information being used by the NEF to select UEs that preferentially satisfy a filtering criterion with a high importance.

8. The method of any one of claims 1 to 3,
wherein the subscription message further includes a plurality of filtering criteria included in the at least one filtering criterion,
wherein the plurality of filtering criteria being used by the NEF to select UEs that preferentially satisfy a filtering criterion with higher priority of the plurality of filtering criteria.

9. The method of any one of claims 1 to 3,
wherein the subscription message further includes one or more UE groups, priority information of the UE groups, and a UE list including one or more UEs, and
wherein the one or more UE groups the priority information of the UE groups are used, by the NEF, to select from the higher priority UE groups such that the number of UEs included in the candidate UE list is at least a minimum number of the UEs.

10. An Application Function (AF) for performing communications, wherein the AF comprising:
one or more transceivers;
one or more processors; and
one or more memories storing instructions and operably coupled to the one or more processors,
wherein based on the instructions being executed by the one or more processors, the operations being performed include a method according to any one of claims 1 to 9.

11. A method for performing a communication the method performed by a Network Exposure Function (NEF) and comprising:
receiving a subscription message related to UE member selection assistance for selecting User Equipment (UE) for application operation, from an Application Function (AF),
wherein the subscription message includes i) a minimum number and/or a maximum number of UEs, and ii) a weighting factor of one or more filtering criteria for filtering UE members;
determining a list of candidate UEs for the application operation, based on the subscription message; and
transmitting a notification message related to the UE member selection assistance, to the AF,
wherein the notification message comprising the list of candidate UEs.

12. The method of claim 11,
wherein one or more UEs included in the list of the candidate UEs are UEs that transmits a Packet Data Unit (PDU) session establishment request message to a 5th Generation Core network (5GC) including the NEF, and receives the PDU session establishment message.

13. An Network Exposure Function (NEF) for performing communications, wherein the NEF comprising:
one or more transceivers;
one or more processors; and
one or more memories storing instructions and operably coupled to the one or more processors,
wherein based on the instructions being executed by the one or more processors, the operations being performed include a method according to any one of claims 1 to 9.

14. A method for performing a communication, the method performed by a User Equipment (UE) and comprising:
transmitting a Packet Data Unit (PDU) session establishment request message to a 5th Generation Core network (5GC) via a base station;
receiving a PDU session establishment accept message from the 5GC via the base station;
receiving information related to an application operation of an Application Function (AF) from the 5GC based on the UE's PDU session; and
transmitting information used by the AF to perform the application operation to the 5GC;
wherein the UE is included in the list of candidate UEs for the application operation by the Network Exposure Function (NEF) included in the 5GC, and wherein the UE is selected for the application operation by the AF.

15. A user equipment (UE) configured to operate in a wireless communication system, the UE comprising:
one or more transceivers;
one or more processors; and
one or more memories storing instructions and operably coupled to the one or more processors,
wherein based on the instructions being executed by the one or more processors, the operations being performed include a method according to claim 15.
